# EUROPEAN PATENT APPLICATION

(11) **EP 4 586 673 A1**
(43) Date of publication of application: **16.07.2025**
(21) Application number: 23881911.4
(22) Date of filing: 26.10.2023
(51) Int. Cl.: H04W 24/08

(54) **WIRELESS SENSING METHOD AND APPARATUS, AND ELECTRONIC DEVICE**

(30) Priority: 28.10.2022 CN 202211338634
(71) Applicant: Huawei Technologies Co., Ltd., Shenzhen, Guangdong 518129 (CN)
(72) Inventor: XIAO, Houfei, Shenzhen, Guangdong 518129 (CN); DU, Rui, Shenzhen, Guangdong 518129 (CN); DING, Rentian, Shenzhen, Guangdong 518129 (CN)
(74) Representative: Pfenning, Meinig & Partner mbB
(86) International application number: PCT/CN2023/126711
(87) International publication number: WO 2024/088335

(57) **Abstract**

This application provides a wireless sensing method and apparatus, and an electronic device. The method includes: receiving a sensing packet sent by a transmit end; obtaining a fixed gain value, and processing the sensing packet based on the fixed gain value, to obtain a first channel estimation result; and determining corresponding channel state information based on the first channel estimation result, and performing wireless sensing by using the channel state information. **In** this application, after receiving the sensing packet sent by the transmit end, a receive end processes the sensing packet by using the fixed gain value, to obtain the first channel estimation result, and determines the corresponding channel state information based on the first channel estimation result. **In** this way, the obtained channel state information does not fluctuate due to gain jump caused by automatic gain control. This greatly improves accuracy of obtaining the channel state information, thereby improving precision of performing wireless sensing by using the channel state information, and resolving a problem of low wireless sensing precision.

## Description

This application claims priority to Chinese Patent Application No. 202211338634.9, filed with the China National Intellectual Property Administration on October 28, 2022 and entitled "WIRELESS SENSING METHOD AND APPARATUS, AND ELECTRONIC DEVICE", which is incorporated herein by reference in its entirety.

### TECHNICAL FIELD

This application relates to the field of wireless sensing, and specifically, to a wireless sensing method and apparatus, an electronic device, and a computer-readable storage medium.

### BACKGROUND

With development of wireless fidelity (wireless fidelity, Wi-Fi) technologies, various wireless communication devices have been deployed in a large quantity in people's daily life. These wireless communication devices include mobile phones, computers, wireless routers, smart home devices, wireless sensors, wireless routers, and the like. Important features of these devices are large quantities, low prices, and quite short distances from users. In a common family environment, more than ten or even hundreds of wireless devices are often around users. Surrounding human body actions may be sensed or other information may be measured based on channel information of these devices in wireless communication processes. Such a technology of sensing the human body actions by using the channel information is referred to as a wireless sensing technology.

A problem of low wireless sensing precision exists in the conventional technology when wireless sensing is performed by using channel state information (channel state information, CSI) measured through automatic gain control (Automatic Gain Control, AGC).

### SUMMARY

This application provides a wireless sensing method, to resolve a problem of low sensing precision in the conventional technology when wireless sensing is performed by using channel state information measured through automatic gain control.

According to a first aspect, this technical solution provides a wireless sensing method, applied to a receive end. The method includes: receiving a sensing packet sent by a transmit end; obtaining a fixed gain value, and processing the sensing packet based on the fixed gain value, to obtain a first channel estimation result; and determining corresponding channel state information based on the first channel estimation result, and performing wireless sensing by using the channel state information. In some embodiments, after receiving the sensing packet sent by the transmit end, the receive end processes the sensing packet by using the fixed gain value, to obtain the first channel estimation result, and determines the corresponding channel state information based on the first channel estimation result. In this way, the obtained channel state information does not fluctuate due to gain jump caused by automatic gain control. This greatly improves accuracy of obtaining the channel state information, thereby improving precision of performing wireless sensing by using the channel state information, and resolving a problem of low wireless sensing precision.

With reference to the first aspect, in some implementations of the first aspect, the sensing packet includes a sensing sounding packet. The obtaining a fixed gain value includes: obtaining identification information of the transmit end based on the sensing sounding packet, and detecting, based on the identification information, whether the transmit end matches the receive end; and if the transmit end matches the receive end, determining, based on a preset relationship table, a fixed gain value corresponding to the identification information, where a correspondence between the identification information and the fixed gain value is stored in the preset relationship table. In some embodiments, after receiving the sensing sounding packet sent by the transmit end, the receive end may dynamically determine whether to process the sensing sounding packet by using the fixed gain value. When the sensing sounding packet is processed by using the fixed gain value, a differentiated behavior of a chip of the receive end can be shielded, to more accurately reflect an air interface channel state, so as to perform more precision sensing. For example, motion and rest can be better distinguished, or accuracy of posture identification can be improved. After processing the sensing sounding packet by using the fixed gain value, the receive end obtains the first channel estimation result, and determines the corresponding channel state information based on the first channel estimation result. In this way, the obtained channel state information does not fluctuate due to gain jump caused by automatic gain control. This greatly improves accuracy of obtaining the channel state information, thereby improving precision of performing wireless sensing by using the channel state information, and resolving the problem of low wireless sensing precision.

With reference to the first aspect, in some implementations of the first aspect, before the determining, based on a preset relationship table, a fixed gain value corresponding to the identification information, the method further includes: obtaining a fixed gain value corresponding to at least one transmit end; and establishing a correspondence between identification information of the at least one transmit end and the fixed gain value, and generating the preset relationship table based on the correspondence between the identification information of the at least one transmit end and the fixed gain value. In some embodiments, the correspondence between the identification information and the fixed gain value is stored in the preset relationship table. After obtaining the identification information of the transmit end based on the sensing sounding packet, the receive end can search the preset relationship table for the fixed gain value corresponding to the identification information, process the sensing sounding packet by using the fixed gain value, and then determine the corresponding channel state information to perform wireless sensing.

With reference to the first aspect, in some implementations of the first aspect, the obtaining a fixed gain value corresponding to at least one transmit end includes: receiving a non-sensing packet sent by the transmit end; and determining, according to an automatic gain control algorithm, a dynamic gain value corresponding to the non-sensing packet, and determining, as the fixed gain value corresponding to the transmit end, the dynamic gain value corresponding to the non-sensing packet. In some embodiments, the fixed gain value may be a dynamic gain value corresponding to a non-sensing packet. Therefore, the preset relationship table can be established based on the correspondence between the identification information and the fixed gain value.

With reference to the first aspect, in some implementations of the first aspect, the obtaining a fixed gain value corresponding to at least one transmit end includes: receiving at least one non-sensing packet sent by the transmit end; and determining, according to an automatic gain control algorithm, a dynamic gain value corresponding to the at least one non-sensing packet, and determining, as the fixed gain value corresponding to the transmit end, a dynamic gain value that appears most frequently. In some embodiments, the fixed gain value may be determined based on dynamic gain values of several consecutive non-sensing packets. Therefore, the preset relationship table can be established based on the correspondence between the identification information and the fixed gain value.

With reference to the first aspect, in some implementations of the first aspect, before the detecting, based on the identification information, whether the transmit end matches the receive end, the method further includes: obtaining all devices connected to the receive end, and determining, from all the devices connected to the receive end, at least one device as a transmit end matching the receive end; and allocating corresponding identification information to each transmit end matching the receive end. In some embodiments, before the detecting, based on the identification information, whether the transmit end matches the receive end, to determine the transmit end matching the receive end, the transmit end matching the receive end may be further determined, according to a preset rule, from all the devices connected to the receive end.

With reference to the first aspect, in some implementations of the first aspect, the determining, from all the devices connected to the receive end, at least one device as a transmit end matching the receive end includes: selecting, as the transmit end matching the receive end, a device whose device attribute meets a preset requirement from all the devices connected to the receive end, where the device attribute includes at least one of a device type, a device location, and a device signal strength. In some embodiments, a device whose device type is a type A (for example, a mobile communication device) may be selected as the transmit end matching the receive end, or a device for which a distance between a device location and the receive end is less than a first preset value may be selected as the transmit end matching the receive end, or a device whose device signal strength is greater than a second preset value may be selected as the transmit end matching the receive end. Further, a device whose device type is the type A, for which a distance between a device location and the receive end is less than the first preset value, and whose device signal strength is greater than the second preset value may alternatively be selected as the transmit end matching the receive end. Further, in addition to selecting, based on the distance between the device location and the receive end, the transmit end matching the receive end, the transmit end matching the receive end may alternatively be selected based on whether device locations are in a same area or room. For example, devices that are all in a primary bedroom or all in a living room are selected as transmit ends matching the receive end.

With reference to the first aspect, in some implementations of the first aspect, the identification information includes at least one of a connection identification code, a partial connection identification code, and a preset identity number. In some embodiments, the receive end may determine, by detecting whether the identification information in the sensing sounding packet is the identification information allocated by the receive end, whether the transmit end matches the receive end.

With reference to the first aspect, in some implementations of the first aspect, before the processing the sensing packet based on the fixed gain value, to obtain a first channel estimation result, the method further includes: determining, according to an automatic gain control algorithm, a dynamic gain value corresponding to a preset non-sensing packet and a dynamic gain value corresponding to the sensing sounding packet, where the preset non-sensing packet is a received non-sensing packet sent by the transmit end before the sensing sounding packet is sent; calculating a difference between the dynamic gain value corresponding to the sensing sounding packet and the dynamic gain value corresponding to the preset non-sensing packet; determining whether the difference exceeds a preset threshold; if the difference does not exceed the preset threshold, performing a step of processing the sensing sounding packet based on the fixed gain value, to obtain the first channel estimation result, or if the difference exceeds the preset threshold, processing the sensing sounding packet based on the dynamic gain value corresponding to the sensing sounding packet, to obtain a second channel estimation result; and determining corresponding channel state information based on the second channel estimation result, and performing wireless sensing by using the channel state information. In some embodiments, the dynamic gain value corresponding to the preset non-sensing packet and the dynamic gain value corresponding to the sensing sounding packet are determined. A relationship between the preset threshold and the difference between the dynamic gain value corresponding to the preset non-sensing packet and the dynamic gain value corresponding to the sensing sounding packet may be calculated to determine whether to process the sensing sounding packet by using the fixed gain value. When the difference between the dynamic gain value corresponding to the preset non-sensing packet and the dynamic gain value corresponding to the sensing sounding packet is less than the preset threshold, the difference between the dynamic gain value corresponding to the preset non-sensing packet and the dynamic gain value corresponding to the sensing sounding packet is not large, that is, the dynamic gain value corresponding to the sensing sounding packet does not clearly jump. It indicates that the sensing sounding packet is not clearly affected when the sensing sounding packet is processed by using the fixed gain value.

With reference to the first aspect, in some implementations of the first aspect, before the determining whether the difference exceeds a preset threshold, the method further includes: modifying the preset threshold in response to an input preset threshold modification command.

With reference to the first aspect, in some implementations of the first aspect, before the obtaining a fixed gain value, the method further includes: detecting whether sensing indication information exists in a first field of the sensing packet; and if the sensing indication information exists in the first field of the sensing packet, performing a step of obtaining the fixed gain value. The obtaining identification information of the transmit end based on the sensing sounding packet includes: reading the identification information of the transmit end from a second field of the sensing sounding packet. The processing the sensing packet based on the fixed gain value, to obtain a first channel estimation result includes: processing a third field of the sensing sounding packet based on the fixed gain value, to obtain the first channel estimation result. In some embodiments, a channel estimation result is obtained by performing a channel estimation algorithm on the third field of the sensing sounding packet. Therefore, to improve processing efficiency of the sensing sounding packet to improve wireless sensing efficiency, only the third field of the sensing sounding packet may be further processed based on the fixed gain value, to obtain the first channel estimation result.

With reference to the first aspect, in some implementations of the first aspect, the sensing sounding packet includes at least one of an HE NDP packet, a VHT NDP packet, and an HT NDP packet. When the sensing sounding packet is the HE NDP packet, the first field of the sensing sounding packet is an HE-SIG-A1 field, an HE-SIG-A2 field, or an L-SIG field, the second field of the sensing sounding packet is an HE-SIG-A2 field, and the third field of the sensing sounding packet is an HE-LTF field.

With reference to the first aspect, in some implementations of the first aspect, the sensing packet includes a sensing data packet. The processing the sensing packet based on the fixed gain value, to obtain a first channel estimation result includes: storing the sensing data packet, and determining, according to an automatic gain control algorithm, a dynamic gain value corresponding to the sensing data packet; processing the sensing data packet based on the dynamic gain value corresponding to the sensing data packet, to obtain a third channel estimation result; detecting, based on the third channel estimation result, whether the sensing data packet matches the receive end; and if the sensing data packet matches the receive end, processing the sensing data packet based on the fixed gain value, to obtain the first channel estimation result. In some embodiments, after the sensing data packet sent by the transmit end is received, when it is determined, based on sensing indication information, that the data packet is a sensing data packet, original time domain data of the sensing data packet received by an antenna is stored. The sensing data packet is processed by using the dynamic gain value, to obtain the third channel estimation result. A data field is demodulated by using the third channel estimation result, to obtain a sending address and a destination address. When the destination address is the same as the receive end, and the sending address is a transmit end matching the receive end, the sensing data packet is reprocessed by using the fixed gain value corresponding to the transmit end, to obtain the first channel estimation result. The corresponding channel state information is determined based on the first channel estimation result. In this way, the obtained channel state information does not fluctuate due to gain jump caused by automatic gain control. This greatly improves accuracy of obtaining the channel state information, thereby improving precision of performing wireless sensing by using the channel state information, and resolving the problem of low wireless sensing precision.

With reference to the first aspect, in some implementations of the first aspect, the detecting, based on the third channel estimation result, whether the sensing data packet matches the receive end includes: demodulating the data field of the sensing data packet based on the third channel estimation result, to obtain the sending address and the destination address of the sensing data packet; detecting whether the destination address of the sensing data packet is the same as the receive end; and if the destination address of the sensing data packet is not the same as the receive end, determining that the sensing data packet does not match the receive end, or if the destination address of the sensing data packet is the same as the receive end, detecting whether the transmit end matching the receive end includes the sending address of the sensing data packet; and if the transmit end matching the receive end does not include the sending address of the sensing data packet, determining that the sensing data packet does not match the receive end, or if the transmit end matching the receive end includes the sending address of the sensing data packet, determining that the sensing data packet matches the receive end. In some embodiments, the data field of the sensing data packet is demodulated based on the third channel estimation result, to obtain the sending address and the destination address of the sensing data packet. Then, whether the destination address of the sensing data packet is the same as the receive end and whether the sending address of the sensing data packet is the transmit end matching the receive end are detected separately. It is determined that the sensing data packet matches the receive end only when the destination address of the sensing data packet is the same as the receive end and the sending address of the sensing data packet is the transmit end matching the receive end. A subsequent wireless sensing procedure is performed by using the sensing data packet.

With reference to the first aspect, in some implementations of the first aspect, before the obtaining a fixed gain value, the method further includes: detecting whether the sensing indication information exists in a first field of the sensing data packet; and if the sensing indication information exists in the first field of the sensing data packet, performing a step of obtaining the fixed gain value. The determining, according to an automatic gain control algorithm, a dynamic gain value corresponding to the sensing data packet includes: determining, according to the automatic gain control algorithm, a dynamic gain value corresponding to a second field of the sensing data packet. The processing the sensing packet based on the fixed gain value, to obtain a first channel estimation result includes: processing the second field of the sensing data packet based on the fixed gain value, to obtain the first channel estimation result. In some embodiments, a channel estimation result is obtained by performing a channel estimation algorithm on the second field of the sensing data packet. Therefore, to improve processing efficiency of the sensing data packet to improve wireless sensing efficiency, only the second field of the sensing data packet may be further processed based on the fixed gain value, to obtain the first channel estimation result.

With reference to the first aspect, in some implementations of the first aspect, the sensing data packet includes at least one of an HE Date packet, a VHT Date packet, and an HT Date packet. When the sensing data packet is the HE Date packet, the first field of the sensing data packet is an HE-SIG-A1 field or an L-SIG field, and the second field of the sensing data packet is an HE-LTF field.

With reference to the first aspect, in some implementations of the first aspect, the sensing packet includes a sensing response packet. The processing the sensing packet based on the fixed gain value, to obtain a first channel estimation result includes: storing the sensing response packet, and determining a destination address of the sensing response packet based on the sensing response packet; detecting, based on the destination address of the sensing response packet, whether the sensing response packet matches the receive end; and if the sensing response packet matches the receive end, processing the sensing response packet based on the fixed gain value, to obtain the first channel estimation result. In some embodiments, after the sensing response packet sent by the transmit end is received, when it is determined, based on sensing indication information, that the response packet is a sensing response packet, original time domain data of the sensing response packet received by an antenna is stored. The sensing response packet is processed by using a dynamic gain value, to obtain a fourth channel estimation result. A first field is demodulated by using the fourth channel estimation result, to obtain the sensing indication information. It is determined, based on the sensing indication information, that the packet is a sensing sounding packet. The sensing response packet is reprocessed by using the fixed gain value corresponding to the transmit end, to obtain the first channel estimation result. The corresponding channel state information is determined based on the first channel estimation result. In this way, the obtained channel state information does not fluctuate due to gain jump caused by automatic gain control. This greatly improves accuracy of obtaining the channel state information, thereby improving precision of performing wireless sensing by using the channel state information, and resolving the problem of low wireless sensing precision.

With reference to the first aspect, in some implementations of the first aspect, before the obtaining a fixed gain value, the method further includes: detecting whether the sensing indication information exists in the first field of the sensing response packet; and if the sensing indication information exists in the first field of the sensing response packet, performing a step of obtaining the fixed gain value. The determining, according to an automatic gain control algorithm, a dynamic gain value corresponding to the sensing response packet includes: determining, according to the automatic gain control algorithm, a dynamic gain value corresponding to a second field of the sensing response packet. The processing the sensing packet based on the fixed gain value, to obtain a first channel estimation result includes: processing the second field of the sensing response packet based on the fixed gain value, to obtain the first channel estimation result. A channel estimation result is obtained by performing a channel estimation algorithm on the second field of the sensing response packet. Therefore, to improve processing efficiency of the sensing response packet to improve wireless sensing efficiency, only the second field of the sensing response packet may be further processed based on the fixed gain value, to obtain the first channel estimation result.

With reference to the first aspect, in some implementations of the first aspect, before the receiving a sensing packet sent by a transmit end, the method further includes: enabling a wireless sensing function in response to a wireless sensing request. In some embodiments, a computing resource is consumed when the wireless sensing function is in an enabled state. A user goes out to work in daytime, and no person is in a house. In this case, the wireless sensing function does not need to be enabled. Therefore, to avoid consumption of the computing resource, the wireless sensing function may be enabled when the receive end receives the wireless sensing request.

With reference to the first aspect, in some implementations of the first aspect, the sensing response packet is an Ack packet. The first field of the sensing response packet is an L-SIG field. The second field of the sensing response packet is an L-LTF field.

According to a second aspect, this technical solution provides a wireless sensing method, applied to a transmit end. The method includes: generating a to-be-sent packet in response to a wireless sensing request; adding sensing indication information to the to-be-sent packet, to obtain a sensing packet; and sending the sensing packet to a receive end. In some embodiments, in this application, after receiving the sensing packet sent by the transmit end, the receive end processes the sensing packet by using a fixed gain value, to obtain a first channel estimation result, and determines corresponding channel state information based on the first channel estimation result. In this way, the obtained channel state information does not fluctuate due to gain jump caused by automatic gain control. This greatly improves accuracy of obtaining the channel state information, thereby improving precision of performing wireless sensing by using the channel state information, and resolving a problem of low wireless sensing precision.

With reference to the second aspect, in some implementations of the second aspect, the to-be-sent packet includes a sounding packet. The adding sensing indication information to the to-be-sent packet, to obtain a sensing packet includes: adding the sensing indication information to a first field of the sounding packet, and adding identification information of the transmit end to a second field of the sounding packet, to obtain the sensing sounding packet.

The packet includes a data packet. The adding sensing indication information to the to-be-sent packet, to obtain a sensing packet includes: adding the sensing indication information to a first field of the data packet, so as to obtain the sensing data packet.

With reference to the second aspect, in some implementations of the second aspect, the to-be-sent packet includes a response packet. The adding sensing indication information to the to-be-sent packet, to obtain a sensing packet includes: adding the sensing indication information to a first field of the response packet, to obtain the sensing sounding packet.

According to a third aspect, this technical solution provides a wireless sensing system, including a transmit end and a receive end. The transmit end is configured to: generate a to-be-sent packet in response to a wireless sensing request; add sensing indication information to the to-be-sent packet, to obtain a sensing packet; and send the sensing packet to the receive end. The receive end is configured to: receive the sensing packet sent by the transmit end; obtain a fixed gain value, and process the sensing packet based on the fixed gain value, to obtain a first channel estimation result; and determine corresponding channel state information based on the first channel estimation result, and perform wireless sensing by using the channel state information.

According to a fourth aspect, this technical solution provides a wireless sensing apparatus, used in a receive end. The wireless sensing apparatus includes: a receiving module, configured to receive a sensing packet sent by a transmit end; a first obtaining module, configured to: obtain a fixed gain value, and process the sensing packet based on the fixed gain value, to obtain a first channel estimation result; and a determining module, configured to: determine corresponding channel state information based on the first channel estimation result, and perform wireless sensing by using the channel state information.

According to a fifth aspect, this technical solution provides a wireless sensing apparatus, used in a transmit end. The wireless sensing apparatus includes: a second obtaining module, configured to generate a to-be-sent packet in response to a wireless sensing request; an adding module, configured to add sensing indication information to the to-be-sent packet, to obtain a sensing packet; and a sending module, configured to send the sensing packet to a receive end.

According to a sixth aspect, this technical solution provides an electronic device, including a processor and a memory. The memory is configured to store at least one instruction. When the instruction is loaded and executed by the processor, the foregoing wireless sensing method is implemented.

According to a seventh aspect, this technical solution provides a computer-readable storage medium. The computer-readable storage medium stores a computer program. When the computer program is executed by a processor, the foregoing wireless sensing method is implemented.

### BRIEF DESCRIPTION OF DRAWINGS

To describe the technical solutions in embodiments of this application more clearly, the following briefly describes the accompanying drawings for describing embodiments. It is clear that the accompanying drawings in the following descriptions show merely some embodiments of this application, and a person of ordinary skill in the art may further derive other drawings from these accompanying drawings without creative efforts.
FIG. 1 is a diagram of a Wi-Fi propagation path;
FIG. 2 is a diagram of AGC control;
FIG. 3 is a diagram of a structure of an electronic device according to an embodiment of this application;
FIG. 4 is a flowchart of a first wireless sensing method according to an embodiment of this application;
FIG. 5 is a diagram of a whole-house smart layout according to an embodiment of this application;
FIG. 6 is a diagram of an architecture of a wireless sensing system according to an embodiment of this application;
FIG. 7 is a diagram of an architecture of another wireless sensing system according to an embodiment of this application;
FIG. 8-a is a diagram of CSI information obtained by receiving a data packet through dynamic gain control;

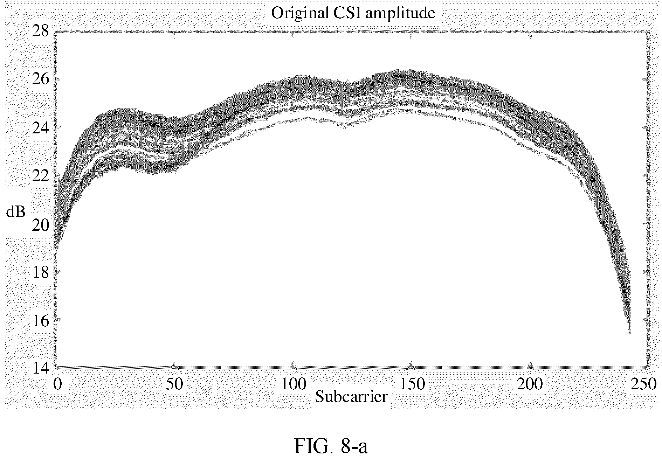

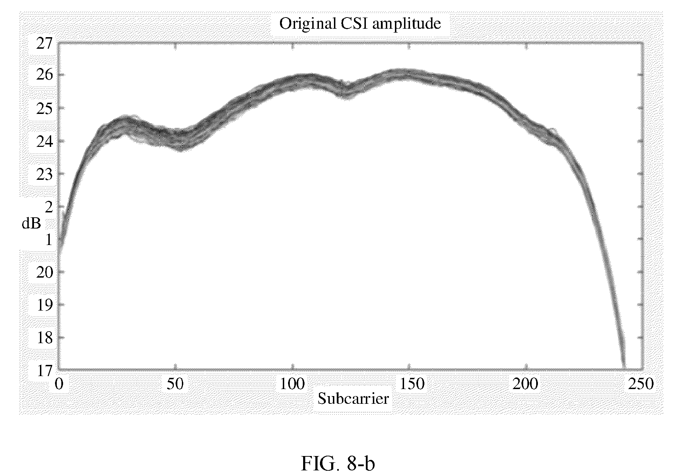

FIG. 8-b is a diagram of CSI information obtained by receiving a data packet through fixed gain control;

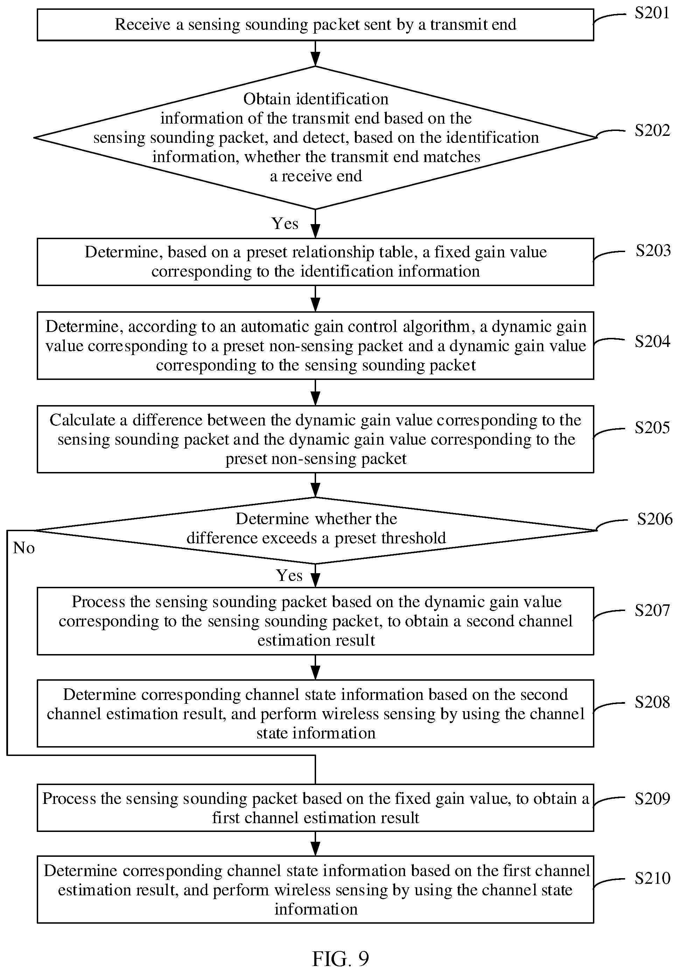

FIG. 9 is a flowchart of a second wireless sensing method according to an embodiment of this application;

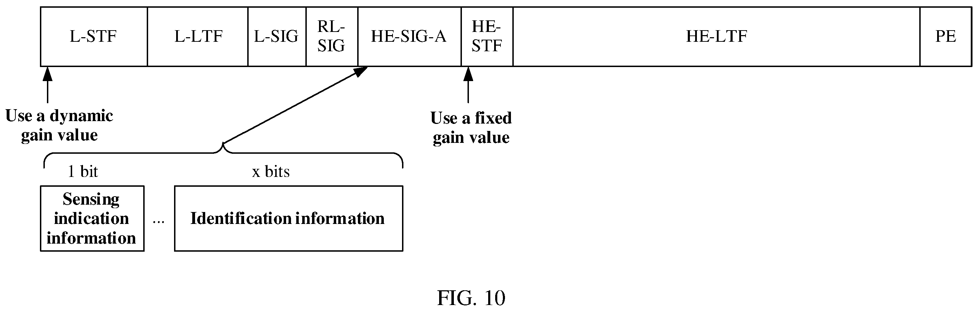

FIG. 10 is a diagram of processing an HE NDP packet according to an embodiment of this application;

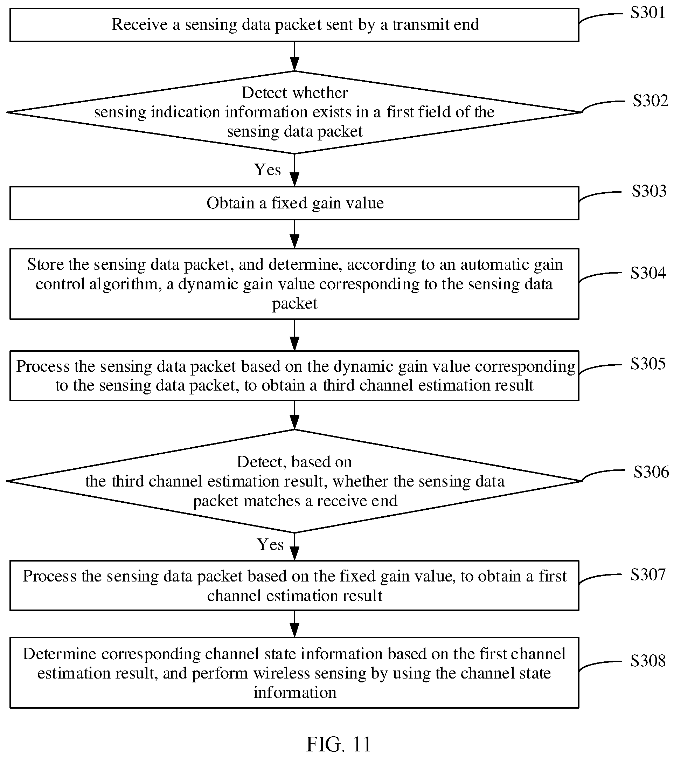

FIG. 11 is a flowchart of a third wireless sensing method according to an embodiment of this application;

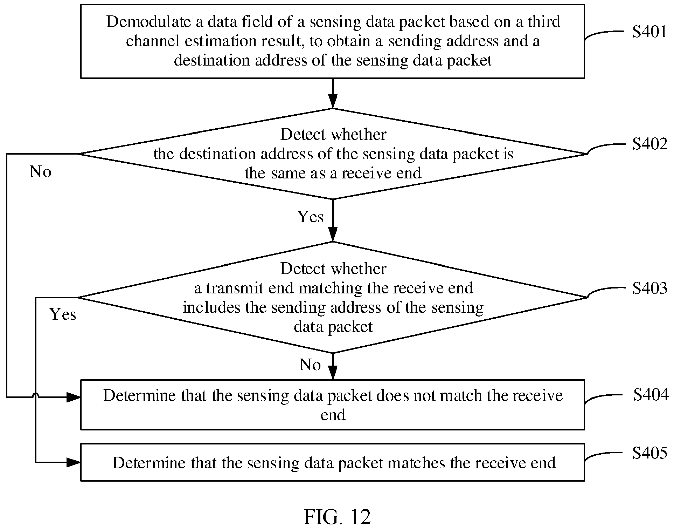

FIG. 12 is a flowchart of detecting, according to a 3^{rd} wireless sensing method according to an embodiment of this application, whether a sensing data packet matches a receive end;

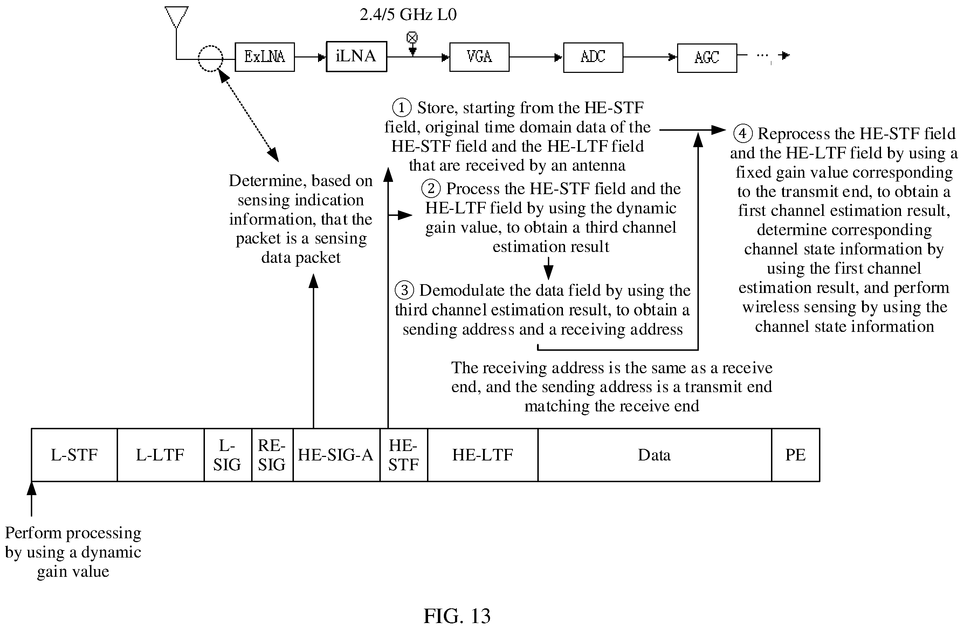

FIG. 13 is a diagram of processing an HE data packet according to an embodiment of this application;

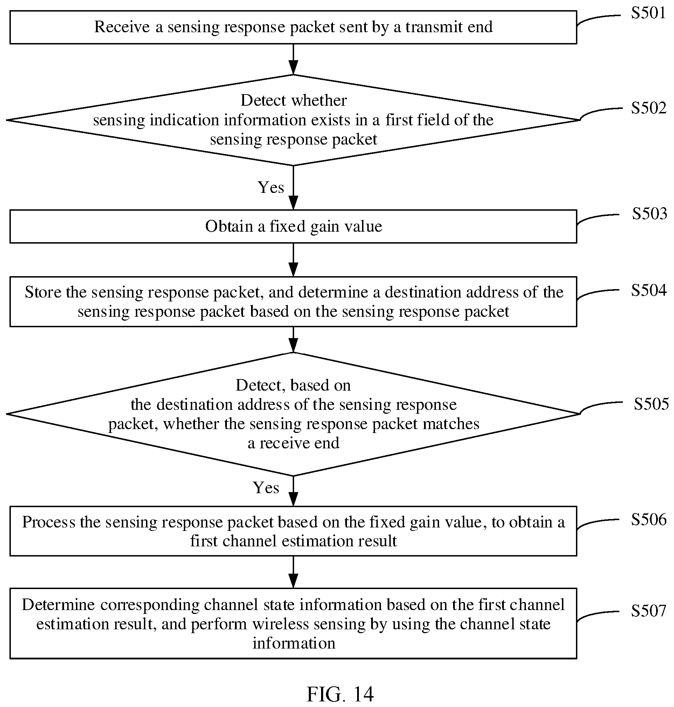

FIG. 14 is a flowchart of a fourth wireless sensing method according to an embodiment of this application;

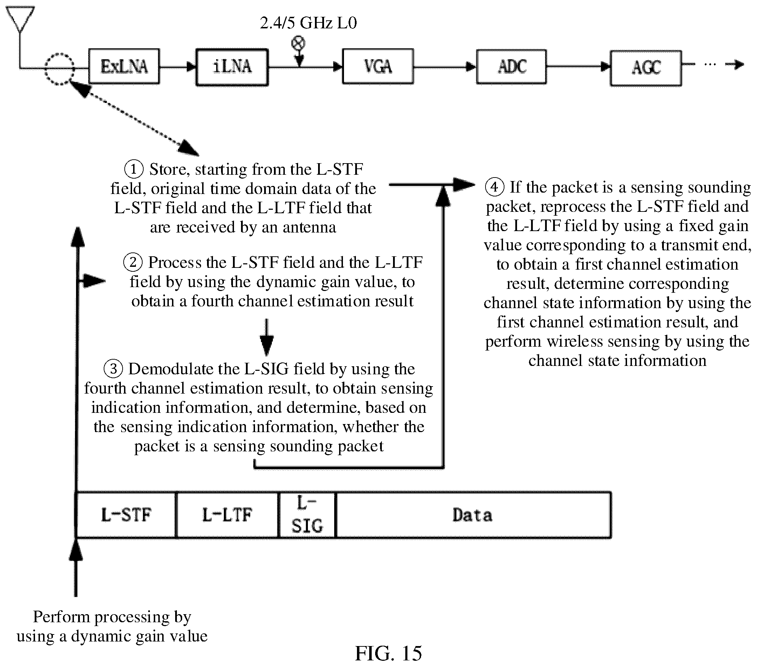

FIG. 15 is a diagram of processing an Ack packet according to an embodiment of this application;

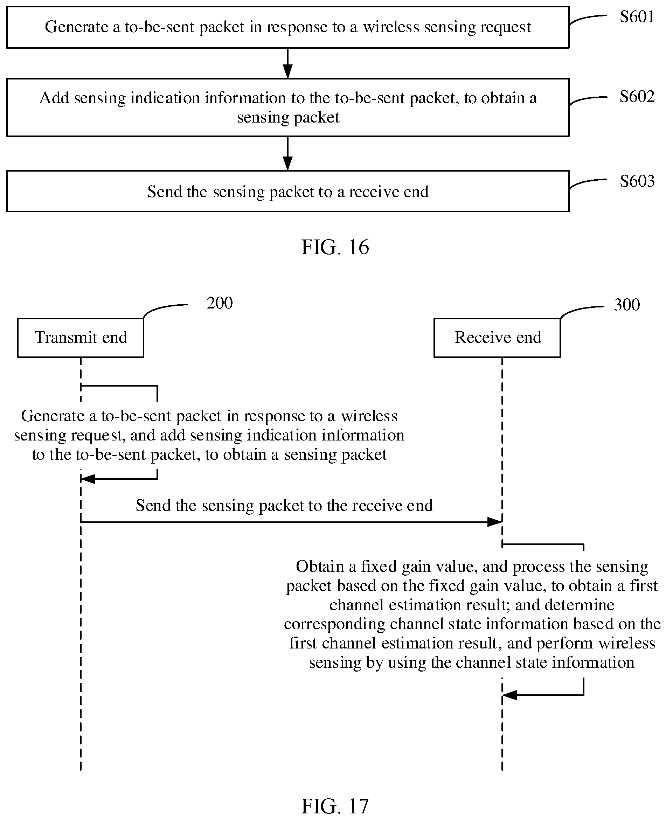

FIG. 16 is a flowchart of a fifth wireless sensing method according to an embodiment of this application;
FIG. 17 is a working flowchart of a wireless sensing system according to an embodiment of this application;

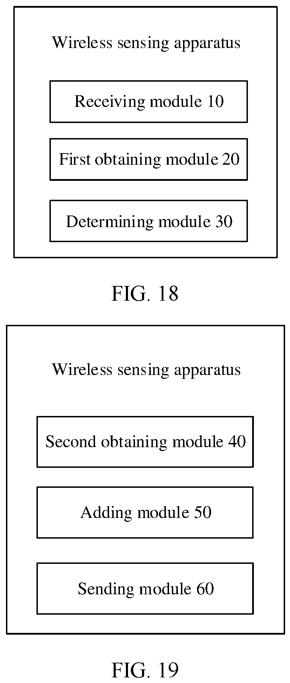

FIG. 18 is a diagram of a structure of a wireless sensing apparatus according to an embodiment of this application; and
FIG. 19 is a diagram of a structure of another wireless sensing apparatus according to an embodiment of this application.

### DESCRIPTION OF EMBODIMENTS

To better understand the technical solutions of this application, the following describes embodiments of this application in detail with reference to the accompanying drawings.

It should be noted that described embodiments are merely some rather than all of embodiments of this application. All other embodiments obtained by a person of ordinary skill in the art without creative efforts based on embodiments of this application shall fall within the protection scope of this application.

Terms used in embodiments of this application are merely for the purpose of describing specific embodiments, and are not intended to limit this application. The terms "a", "the" and "this" of singular forms used in embodiments and the appended claims of this application are also intended to include plural forms, unless otherwise specified in the context clearly.

It should be understood that the term "and/or" used in this specification describes only an association relationship between associated objects and indicates that three relationships may exist. For example, A and/or B may indicate the following three cases: Only A exists, both A and B exist, and only B exists. In addition, the character "/" in this specification generally indicates an "or" relationship between associated objects.

With development of Wi-Fi technologies, various wireless communication devices have been deployed in a large quantity in people's daily life. These wireless communication devices include mobile phones, computers, wireless routers, smart home devices, wireless sensors, wireless routers, and the like. Important features of these devices are large quantities, low prices, and close proximity to users. In a common family environment, more than ten or even hundreds of wireless devices are often around users. Surrounding human body actions may be sensed or other information may be measured based on channel information of these devices in wireless communication processes. Such a technology of sensing the human body actions by using the channel information is referred to as a wireless sensing technology.

In a conventional Wi-Fi sensing manner, a received signal strength indicator (received signal strength indicator, RSSI) is used for sensing. The RSSI describes only total received power, represents only total received energy of a channel, but does not represent an environmental feature like multipath in detail. There are problems such as a coarse detection granularity, a tendency to being affected by multipath or environmental noise, an unstable measured value, and unimplementable large-scale commercial use. Therefore, it is always difficult to make a great breakthrough in sensing precision that is based on a Wi-Fi RSSI technology.

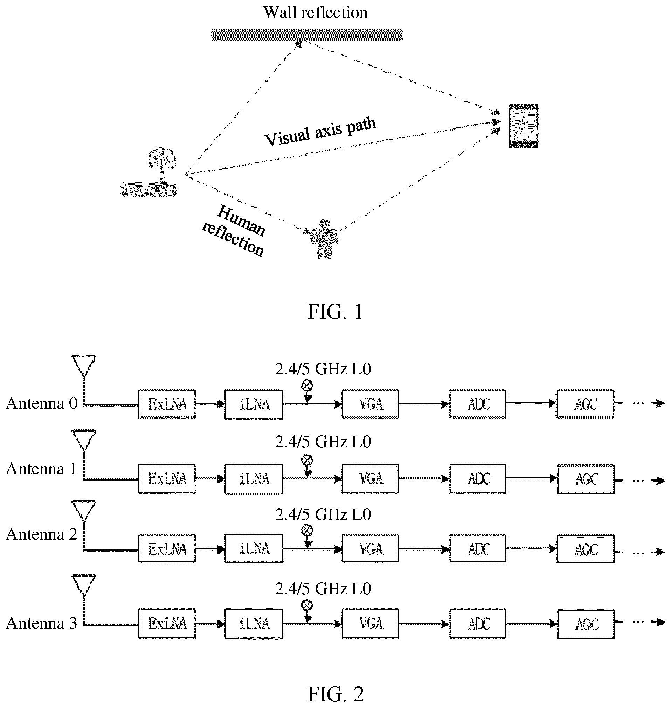

FIG. 1 is a diagram of a Wi-Fi propagation path. In the conventional technology, a Wi-Fi sensing manner that is widely studied is sensing by using CSI. Different from an RSSI, CSI reported by a Wi-Fi device includes amplitude and phase information of each propagation path, has a finer granularity, and can reflect channel features such as a multipath effect, environmental attenuation, and distortion that a received signal undergoes. Based on the rich physical information, sensing precision can be effectively improved. As shown in FIG. 1, different paths have different CSI information.

In an 802.11 frame format, a receive end uses a preamble part to perform channel estimation, to obtain the CSI information. However, the obtained CSI information is a by-product (an output of channel estimation) obtained in a process of receiving a communication packet for demodulating a data symbol. Therefore, the actually obtained CSI information is not real air interface channel state information, but includes channel state information affected by bottom-layer processing of a transmit end and the receive end. For example, sending power adjustment or an antenna mapping mode of the transmit end introduces an interference item of the transmit end into the CSI information, and a radio frequency component and baseband processing of the receive end introduce an interference item of the receive end into the CSI information.

AGC is an automatic control method for adjusting a gain of an amplification circuit with a change of a signal strength, and has great impact on the CSI information at the receive end. FIG. 2 is a diagram of AGC control. AGC is responsible for gain control of an external low noise amplifier (External low noise amplifier, ExLNA)/an internal low noise amplifier (iLNA)/a variable gain amplifier (Variable gain amplifier, VGA) (allocating an appropriate gain to the ExLNA/iLNA/VGA), so that an input signal of an analog-to-digital converter (Analog-to-Digital Converter, ADC) has constant power. As shown in FIG. 2, in a process in which a receiver processes a communication packet, an AGC level of a receiving gain is dynamically controlled and adjusted frame by frame according to an AGC algorithm based on preamble energy of each data packet, to ensure that a received signal is not saturated or is excessively small.

However, even in an empty room, when a receive end obtains CSI corresponding to packets from a same sending device at a fixed location, the CSI obtained by the receive end through AGC also fluctuates greatly. A reason is that jump of AGC affects the CSI, and then affects accuracy of a sensing algorithm. For example, a person or an object in a static state is incorrectly determined to be in an active state. For Wi-Fi sensing, more stable CSI in a static state is better, but because AGC at the receive end jumps, the CSI fluctuates greatly. Consequently, a problem of low sensing precision exists when wireless sensing is performed by using the CSI information. Therefore, this application provides a wireless sensing method, to resolve the foregoing problem.

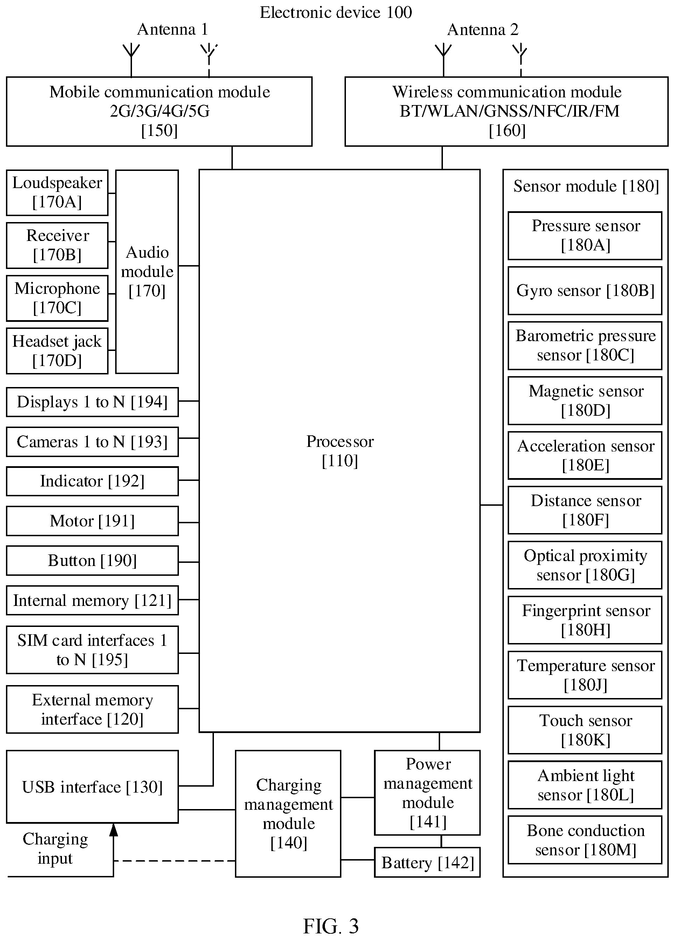

FIG. 3 is a diagram of a structure of an electronic device according to an embodiment of this application.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a loudspeaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like. It may be understood that the structure shown in this embodiment of this application does not constitute a specific limitation on the electronic device 100. In some other embodiments of this application, the electronic device 100 may include more or fewer components than those shown in the figure, or combine some of the components, or split some of the components, or have different arrangements of the components. The components shown in the figure may be implemented by hardware, software, or a combination of software and hardware.

The processor 110 may include one or more processing units. For example, the processor 110 may include an application processor, a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache. The memory may store an instruction or data just used or cyclically used by the processor 110. If the processor 110 needs to use the instruction or the data again, the processor may directly invoke the instruction or the data from the memory. This avoids repeated access, and reduces waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identification module (subscriber identification module, SIM) interface, a universal serial bus (universal serial bus, USB) interface, and/or the like.

The USB interface 130 is an interface that conforms to a USB standard specification, and may be specifically a mini USB interface, a micro USB interface, a USB type-C interface, or the like. The USB interface 130 may be configured to connect to a charger to charge the electronic device 100, or may be configured to transmit data between the electronic device 100 and a peripheral device, or may be configured to connect to a headset for playing an audio through the headset. The interface may alternatively be configured to connect to another electronic device like an AR device.

It may be understood that an interface connection relationship between the modules illustrated in this embodiment of this application is merely an example for description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to: transmit and receive electromagnetic wave signals. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The wireless communication module 160 may provide a solution that is applied to the electronic device 100 and that includes wireless communication such as a wireless local area network (wireless local area network, WLAN) (for example, a Wi-Fi network), Bluetooth (Bluetooth, BT), a global navigation satellite system (global navigation satellite system, GNSS), frequency modulation (frequency modulation, FM), a near field communication (near field communication, NFC) technology, and an infrared (infrared, IR) technology. The wireless communication module 160 may be one or more components integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the to-be-sent signal, and convert a processed signal into an electromagnetic wave for radiation through the antenna 2.

The external memory interface 120 may be configured to connect to an external storage card, for example, a micro SD card, to extend a storage capability of the electronic device 100. The external storage card communicates with the processor 110 through the external memory interface 120, to implement a data storage function. For example, files such as music and a video are stored in the external storage card.

The internal memory 121 may be configured to store computer-executable program code. The executable program code includes instructions. The internal memory 121 may include a program storage area and a data storage area. The program storage area may store an operating system, an application required by at least one function (for example, a sound playing function or an image playing function), and the like. The data storage area may store data (for example, audio data and a phone book) created during use of the electronic device 100, and the like. In addition, the internal memory 121 may include a high-speed random access memory, and may further include a non-volatile memory, for example, at least one magnetic disk storage component, a flash memory component, or a universal flash storage (universal flash storage, UFS). The processor 110 runs the instructions stored in the internal memory 121 and/or the instructions stored in the memory disposed in the processor, to perform various function applications of the electronic device 100 and data processing.

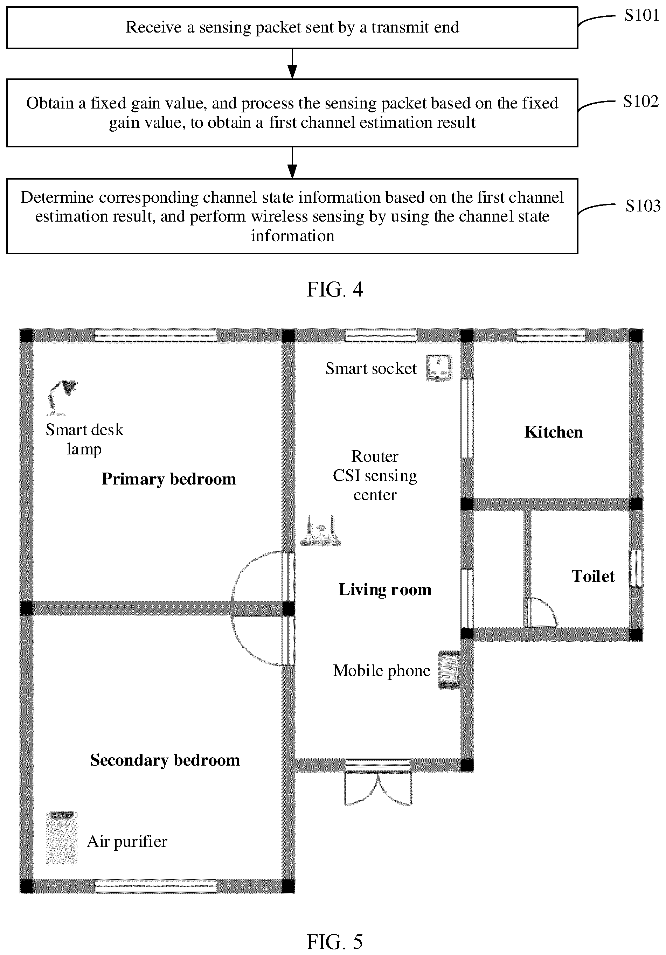

FIG. 4 is a flowchart of a first wireless sensing method according to an embodiment of this application. The method is applied to a receive end. The method may include but is not limited to the following steps.

Step S101: Receive a sensing packet sent by a transmit end.

In some embodiments, wireless sensing needs to be implemented by a pair of wireless devices. For example, one end is a receive end like an access point (Access Point, AP) or a CSI sensing center, and the other end is a transmit end like a mobile terminal, a smart screen, a smart speaker, or a smart socket.

FIG. 5 is a diagram of a whole-house smart layout according to an embodiment of this application. In some embodiments, a CSI sensing center may receive sensing packets sent by a smart desk lamp of a primary bedroom, an air purifier of a secondary bedroom, a smart socket of a living room, and a mobile phone, and process the sensing packet by using a fixed gain value, to obtain a first channel estimation result. Corresponding channel state information is determined, for algorithm analysis, based on the first channel estimation result. This can implement a good sensing capability of a channel change in an air interface environment, thereby capturing an activity behavior of a human body or an object in space, and implementing wireless sensing.

In some embodiments, a system architecture in this application includes at least one receive end and at least one transmit end. The receive end may obtain channel state information between the receive end and the transmit end by receiving a sensing packet from the transmit end.

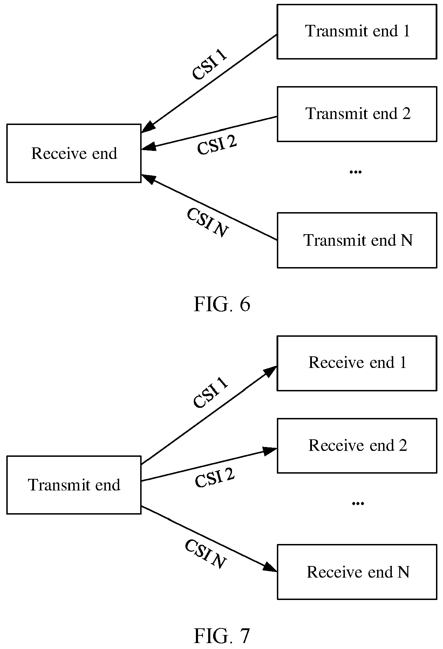

FIG. 6 is a diagram of an architecture of a wireless sensing system according to an embodiment of this application. The system architecture includes one receive end and several transmit ends. The receive end may obtain CSI information between the receive end and different transmit ends by receiving packets from the different transmit ends. As shown in FIG. 6, the receive end may separately obtain CSI information CSI 1, CSI 2, ..., and CSI N between the receive end and a transmit end 1, a transmit end 2, ..., and a transmit end N.

FIG. 7 is a diagram of an architecture of another wireless sensing system according to an embodiment of this application. The system architecture includes N receive ends and one transmit end (for example, an AP). Different receive ends receive a packet from the transmit end, to form CSI information between the different receive ends and the transmit end. As shown in the following figure, a receive end 1, a receive end 2, ..., and a receive end N may respectively obtain CSI information CSI 1, CSI 2, ..., and CSI N between the transmit end and the receive ends.

The receive end is a physical unit and a control unit that perform a sensing function. The transmit end sends a sensing packet and cooperates with the receive end to obtain CSI information for sensing.

In some embodiments, before the sensing packet sent by the transmit end is received, the method further includes:
enabling a wireless sensing function in response to a wireless sensing request.

A computing resource is consumed when the wireless sensing function is in an enabled state. A user goes out to work in daytime, and no person is in a house. In this case, the wireless sensing function does not need to be enabled. Therefore, to avoid consumption of the computing resource, the wireless sensing function may be enabled when the receive end receives the wireless sensing request.

In some embodiments, the wireless sensing function of the receive end may be enabled by default, or may be enabled through an application (application, APP) switch, or enabled through triggering by an upper-layer application service. This is not specifically limited in this application. When the wireless sensing function of the receive end is not enabled, the receive end disables a sensing function, is in a non-sensing mode, and uses a dynamic AGC algorithm to process a packet.

In some embodiments, the sensing packet may include a sensing sounding packet, a sensing data packet, and a sensing response packet based on different functions of the sensing packet.

Step S102: Obtain a fixed gain value, and process the sensing packet based on the fixed gain value, to obtain a first channel estimation result.

In some embodiments, the receive end determines, according to the automatic gain control algorithm, a dynamic gain value corresponding to each packet, and processes the packet by using the dynamic gain value. Therefore, obtained CSI information is interfered with, and cannot express a real air interface channel state. As a result, a problem of low sensing precision exists when wireless sensing is performed by using the CSI information. To improve accuracy of obtaining the channel state information, in this embodiment, the sensing packet is processed by using the fixed gain value. In this way, the obtained channel state information does not fluctuate due to gain jump caused by automatic gain control. This can improve accuracy of obtaining the channel state information.

FIG. 8-a is a diagram of CSI information obtained by receiving data packets through dynamic gain control. In the figure, CSI data is collected from a same pair of Wi-Fi devices that are at a fixed location in an empty room, and is CSI data corresponding to 1500 consecutive data packets received by using a same gain or different gains. Each line indicates CSI information of one data packet, and a horizontal axis represents different subcarriers. It can be seen that, for a same subcarrier, CSI amplitudes jump greatly.

FIG. 8-b is a diagram of CSI information obtained by receiving data packets through fixed gain control. In the figure, CSI data is collected from a same pair of Wi-Fi devices that are at fixed locations in an empty room, and is CSI data corresponding to 800 consecutive data packets received by using a same gain. It can be seen from FIG. 8-b that, when the data packets are received by using the same gain, CSI amplitudes corresponding to the data packets present high consistency. In other words, the sensing packets are processed by using a fixed gain value, so that the obtained channel state information does not fluctuate due to gain jump caused by automatic gain control. This can improve accuracy of obtaining the channel state information.

In some embodiments, the fixed gain value may be a dynamic gain value corresponding to a non-sensing packet, for example, a 1^{st} packet, an intermediate packet, or a last packet. The fixed gain value may alternatively be determined based on dynamic gain values of several consecutive non-sensing packets. For example, a group of gain values that appear most frequently may be determined as the fixed gain value.

In some embodiments, before the fixed gain value is obtained, the fixed gain value may be determined first, and a correspondence between the fixed gain value and the transmit end is stored in a preset location. When the fixed gain value is obtained, the fixed gain value corresponding to the transmit end is obtained from the preset location. Different sensing paired nodes may have different fixed gain values.

Step S103: Determine corresponding channel state information based on the first channel estimation result, and perform wireless sensing by using the channel state information.

In some embodiments, channel estimation is a process of estimating a model parameter of an assumed channel model from received data. A channel estimation result is a mathematical representation of impact of a channel on an input signal. The receive end may obtain an impulse response of the channel by using the channel estimation result, to provide required channel state information for subsequent coherent demodulation.

In some embodiments, after the corresponding channel state information is determined based on the first channel estimation result, calculation may be performed according to a preset wireless sensing algorithm by using the channel state information, to obtain a corresponding wireless sensing result.

According to the wireless sensing method provided in this embodiment of this application, after receiving the sensing packet sent by the transmit end, the receive end processes the sensing packet by using the fixed gain value, to obtain the first channel estimation result, and determines the corresponding channel state information based on the first channel estimation result. In this way, the obtained channel state information does not fluctuate due to gain jump caused by automatic gain control. This greatly improves accuracy of obtaining the channel state information, thereby improving precision of performing wireless sensing by using the channel state information, and resolving the problem of low wireless sensing precision.

FIG. 9 is a flowchart of a second wireless sensing method according to an embodiment of this application. The method is applied to a receive end. The method may include but is not limited to the following steps.

Step S201: Receive a sensing sounding packet sent by a transmit end.

In some embodiments, a sensing packet may include the sensing sounding packet. The sensing sounding packet is generated by the transmit end in response to a wireless sensing request based on a to-be-sent sounding packet. The sounding packet may include but is not limited to a null data packet (Null Data Packet, NDP) and another type of non-data packet. An NDP frame is used as an example. The transmit end may obtain the sensing sounding packet by adding sensing indication information to a first field of the NDP frame, and adding identification information of the transmit end to a second field of the sounding packet.

In some embodiments, whether a received sensing packet is the sensing sounding packet may be determined by detecting whether the sensing indication information exists in a first field of the received non-data packet.

When the sensing indication information exists in the first field of the non-data packet, it indicates that the sensing sounding packet is a packet for wireless sensing. Therefore, a preparation for wireless sensing may be performed on the sensing sounding packet.

In some embodiments, when the sensing indication information does not exist in the first field of the non-data packet, it indicates that the non-data packet is not a sensing sounding packet for wireless sensing. Therefore, the non-data packet in which the sensing indication information does not exist can be further ignored, to reduce a waste of a device resource.

Step S202: Obtain the identification information of the transmit end based on the sensing sounding packet, and detect, based on the identification information, whether the transmit end matches the receive end.

Step S203 is performed if the transmit end matches the receive end.

In some embodiments, the receive end may not match the transmit end of the sensing sounding packet. For example, the transmit end of the sensing sounding packet may not match the current receive end, but the current receive end is used only as a relay device to forward the sensing sounding packet to the receive end matching the transmit end of the sensing sounding packet. Therefore, before wireless sensing is performed by using the sensing sounding packet, whether the transmit end of the sensing sounding packet matches the receive end needs to be detected. Step S204 is performed if the transmit end matches the receive end.

In some embodiments, when the transmit end of the sensing sounding packet does not match the receive end, the receive end may further obtain a destination address of the sensing sounding packet, and forward the sensing sounding packet to the destination address.

In some embodiments, before the detecting, based on the identification information, whether the transmit end matches the receive end, the following steps may be further performed to determine the transmit end matching the receive end:
obtaining all devices connected to the receive end, and determining, from all the devices connected to the receive end, at least one device as the transmit end matching the receive end; and
allocating corresponding identification information to each transmit end matching the receive end.

In some embodiments, the determining, from all the devices connected to the receive end, at least one device as the transmit end matching the receive end may specifically include:
selecting, as the transmit end matching the receive end, a device whose device attribute meets a preset requirement from all the devices connected to the receive end, where the device attribute includes at least one of a device type, a device location, and a device signal strength.

For example, a device whose device type is a type A (for example, a mobile communication device) may be selected as the transmit end matching the receive end, or a device for which a distance between a device location and the receive end is less than a first preset value may be selected as the transmit end matching the receive end, or a device whose device signal strength is greater than a second preset value may be selected as the transmit end matching the receive end. Further, a device whose device type is the type A, for which a distance between a device location and the receive end is less than the first preset value, and whose device signal strength is greater than the second preset value may alternatively be selected as the transmit end matching the receive end. Further, in addition to selecting, based on the distance between the device location and the receive end, the transmit end matching the receive end, the transmit end matching the receive end may alternatively be selected based on whether device locations are in a same area or room. For example, devices that are all in a primary bedroom or all in a living room are selected as transmit ends matching the receive end.

In some embodiments, the determining, from all the devices connected to the receive end, at least one device as the transmit end matching the receive end may alternatively specifically include:
in response to an input selection instruction, selecting, from all the devices connected to the receive end, the at least one device as the transmit end matching the receive end.

For example, a user may specify, on a mobile phone application interface, the transmit end matching the receive end.

In some embodiments, the identification information includes at least one of a connection identification code, a partial connection identification code, and a preset identity number. The receive end may determine, by detecting whether the identification information in the sensing sounding packet is the identification information allocated by the receive end, whether the transmit end matches the receive end.

In some embodiments, the obtaining the identification information of the transmit end based on the sensing sounding packet may be specifically as follows:
reading the identification information of the transmit end from a second field of the sensing sounding packet.

Step S203: Determine, based on a preset relationship table, a fixed gain value corresponding to the identification information.

In some embodiments, a correspondence between the identification information and the fixed gain value is stored in the preset relationship table. After obtaining the identification information of the transmit end based on the sensing sounding packet, the receive end can search the preset relationship table for the fixed gain value corresponding to the identification information, process the sensing sounding packet by using the fixed gain value, and then determine corresponding channel state information to perform wireless sensing.

In some embodiments, before the determining, based on a preset relationship table, a fixed gain value corresponding to the identification information, the preset relationship table may be further established by performing the following steps:
obtaining a fixed gain value corresponding to at least one transmit end; and
establishing a correspondence between identification information of the at least one transmit end and the fixed gain value, and generating the preset relationship table based on the correspondence between the identification information of the at least one transmit end and the fixed gain value.

In some embodiments, the fixed gain value may be a dynamic gain value corresponding to a non-sensing packet, for example, may be a dynamic gain value corresponding to a 1^{st} non-sensing packet. To be specific, the obtaining a fixed gain value corresponding to at least one transmit end may be specifically as follows:
receiving the non-sensing packet sent by the transmit end; and
determining, according to an automatic gain control algorithm, a dynamic gain value corresponding to the non-sensing packet, and determining, as the fixed gain value corresponding to the transmit end, the dynamic gain value corresponding to the non-sensing packet.

In some embodiments, the fixed gain value may alternatively be determined based on dynamic gain values of several consecutive non-sensing packets. For example, a group of gain values that appear most frequently may be determined as the fixed gain value. To be specific, the obtaining a fixed gain value corresponding to at least one transmit end may be specifically as follows:
receiving at least one non-sensing packet sent by the transmit end; and
determining, according to an automatic gain control algorithm, a dynamic gain value corresponding to the at least one non-sensing packet, and determining, as the fixed gain value corresponding to the transmit end, a dynamic gain value that appears most frequently.

In some embodiments, before the obtaining a fixed gain value, the method further includes:
detecting whether the sensing indication information exists in a first field of the sensing packet; and
if the sensing indication information exists in the first field of the sensing packet, performing a step of obtaining the fixed gain value.

Step S204: Determine, according to the automatic gain control algorithm, a dynamic gain value corresponding to a preset non-sensing packet and a dynamic gain value corresponding to the sensing sounding packet.

In some embodiments, the preset non-sensing packet may be a received non-sensing packet that is sent by the transmit end within preset duration that is before the sensing sounding packet is sent. The non-sensing packet may be a communication packet or a data packet for normal communication.

Step S205: Calculate a difference between the dynamic gain value corresponding to the sensing sounding packet and the dynamic gain value corresponding to the preset non-sensing packet.

Step S206: Determine whether the difference exceeds a preset threshold.

Step S207 is performed if the difference exceeds the preset threshold. Step S209 is performed if the difference does not exceed the preset threshold.

In some embodiments, the dynamic gain value corresponding to the preset non-sensing packet and the dynamic gain value corresponding to the sensing sounding packet are determined. A relationship between the preset threshold and the difference between the dynamic gain value corresponding to the preset non-sensing packet and the dynamic gain value corresponding to the sensing sounding packet may be calculated to determine whether to process the sensing sounding packet by using the fixed gain value. When the difference between the dynamic gain value corresponding to the preset non-sensing packet and the dynamic gain value corresponding to the sensing sounding packet is less than the preset threshold, the difference between the dynamic gain value corresponding to the preset non-sensing packet and the dynamic gain value corresponding to the sensing sounding packet is not large, that is, the dynamic gain value corresponding to the sensing sounding packet does not clearly jump. It indicates that the sensing sounding packet is not clearly affected when the sensing sounding packet is processed by using the fixed gain value. In this case, step S209 is performed: processing the sensing sounding packet based on the fixed gain value, to obtain a first channel estimation result.

In some embodiments, when the difference between the dynamic gain value corresponding to the preset non-sensing packet and the dynamic gain value corresponding to the sensing sounding packet is greater than the preset threshold, the difference between the dynamic gain value corresponding to the preset non-sensing packet and the dynamic gain value corresponding to the sensing sounding packet is large, that is, the dynamic gain value corresponding to the sensing sounding packet clearly jumps. It indicates that the sensing sounding packet is clearly affected when the sensing sounding packet is processed by using the fixed gain value. In this case, step S208 is performed: processing the sensing sounding packet based on the dynamic gain value corresponding to the sensing sounding packet, to obtain a second channel estimation result, and performing wireless sensing based on the second channel estimation result.

In some embodiments, the preset threshold may be further modified, to ensure, through a setting of the preset value, that energy of a current packet does not change greatly from energy of a previous packet, so as to ensure that no saturation or excessively small energy appears when the fixed gain value is used. Before the determining whether the difference exceeds a preset threshold, the method further includes:
modifying the preset threshold in response to an input preset threshold modification command.

In some embodiments, the preset threshold modification command includes a modified value of the preset threshold. The modified value may be set by the user or a research and development worker based on a simulation experiment result or an average value of previous preset thresholds. This is not specifically limited in this application.

Step S207: Process the sensing sounding packet based on the dynamic gain value corresponding to the sensing sounding packet, to obtain the second channel estimation result.

Step S208: Determine corresponding channel state information based on the second channel estimation result, and perform wireless sensing by using the channel state information.

In some embodiments, the second channel estimation result is obtained by processing the sensing sounding packet based on the dynamic gain value. The corresponding channel state information is determined by using the second channel estimation result, and wireless sensing is performed by using the channel state information. This can reduce impact on demodulation of the sensing sounding packet.

Step S209: Process the sensing sounding packet based on the fixed gain value, to obtain the first channel estimation result.

In some embodiments, a channel estimation result is obtained by performing a channel estimation algorithm on a third field of the sensing sounding packet. Therefore, to improve processing efficiency of the sensing sounding packet to improve wireless sensing efficiency, only the third field of the sensing sounding packet may be further processed based on the fixed gain value, to obtain the first channel estimation result.

In some embodiments, the sensing sounding packet may include at least one of a high efficiency (High Efficiency, HE) NDP packet, a very high throughput (Very High Throughput, VHT) NDP packet, and a high throughput (High Throughput, HT) NDP packet. When the sensing sounding packet is the HE NDP packet, the first field of the sensing sounding packet may be specifically an HE-SIG-A1 field, an HE-SIG-A2 field, or an L-SIG field, the second field of the sensing sounding packet may be specifically an HE-SIG-A2 field, and the third field of the sensing sounding packet may be specifically an HE-LTF field.

Step S210: Determine corresponding channel state information based on the first channel estimation result, and perform wireless sensing by using the channel state information.

In some embodiments, to add the sensing indication information to the sensing sounding packet, a packet whose SIG field can be sufficiently used to fill sensing information needs to be used. The NDP packet may be reused in an existing protocol. The NDP packet has no data. A reserved (Reserved) bit in a SIG field of the NDP packet and an "unused" field originally used to demodulate a data symbol may be used to fill the sensing indication information and the identification information. Such a manner of processing the NDP packet is also applicable to another packet including a similar frame format. Various SIG fields not only have spare reserved bits for the sensing indication information, but also have sufficient bits that are used to fill the identification information.

An example in which the sensing sounding packet is the HE NDP packet is used for description. FIG. 10 is a diagram of processing the HE NDP packet according to an embodiment of this application.

As shown in FIG. 10, an L-STF field, an L-LTF field, an L-SIG field, an RL-SIG field, and an HE-SIG-A field are processed by using the dynamic gain value. The HE-SIG-A field is parsed to obtain 1-bit sensing indication information and x-bit identification information. When the 1-bit sensing indication information is a preset expected value, and the identification information is the identification information of the transmit end matching the receive end, a third field, namely, an HE-LTF field, of the HE NDP packet, is processed by using the fixed gain value. The corresponding channel state information is determined based on the obtained first channel estimation result. Wireless sensing is performed by using the channel state information.

In some embodiments, a VHT-STF field of the VHT NDP packet and an HT-STF field of the HT NDP are similar to an HE-STF field of the HE NDP packet, and a VHT-LTF field of the VHT NDP packet and an HT-LTF field in the HT NDP packet are similar to the HE-LTF field of the HE NDP packet. Therefore, when the sensing sounding packet is the VHT NDP packet or the HT NDP packet, a manner of processing the packet is the same as a manner of processing the HE NDP packet. Details are not described herein again.

In some embodiments, the sensing sounding packet may be obtained by adding, by the transmit end, the sensing indication information to a first field of the NDP packet, and adding the identification information of the transmit end to the second field of the sounding packet.

The sensing indication information occupies only 1 bit, and the first field used to add the sensing indication information may be an HE-SIG-A1 field in the HE-SIG-A field, or may be an L-SIG field in which one reserved bit exists, or may be another field having at least one reserved bit. This is not specifically limited in this application.

The identification information needs to occupy a plurality of bits. The second field used to add the identification information may be an HE-SIG-A2 field in the HE-SIG-A field. Bits B7 to B10, B11 to B15, and the like in the HE-SIG-A2 field are bits used to demodulate the data symbol. Because the NDP packet has no data, the bits B7 to B10, B11 to B15, and the like in the HE-SIG-A2 field may be used to add the identification information.

It should be noted that a VHT-SIG-A field of the VHT NDP packet and an HT-SIG field of the HT NDP are similar to the HE-SIG-A field of the HE NDP packet, and may be processed in the same manner to obtain the sensing sounding packet. Details are not described herein again.

According to the wireless sensing method provided in this embodiment of this application, after receiving the sensing sounding packet sent by the transmit end, the receive end can dynamically determine whether to process the sensing sounding packet by using the fixed gain value. When the sensing sounding packet is processed by using the fixed gain value, a differentiated behavior of a chip of the receive end can be shielded, to more accurately reflect an air interface channel state, so as to perform more precision sensing. For example, motion and rest can be better distinguished, or accuracy of posture identification can be improved. After processing the sensing sounding packet by using the fixed gain value, the receive end obtains the first channel estimation result, and determines the corresponding channel state information based on the first channel estimation result. In this way, the obtained channel state information does not fluctuate due to gain jump caused by automatic gain control. This greatly improves accuracy of obtaining the channel state information, thereby improving precision of performing wireless sensing by using the channel state information, and resolving a problem of low wireless sensing precision.

FIG. 11 is a flowchart of a third wireless sensing method according to an embodiment of this application. The method is applied to a receive end. The method may include but is not limited to the following steps.

Step S301: Receive a sensing data packet sent by a transmit end.

In some embodiments, a sensing packet may include the sensing data packet. The sensing data packet is generated by the transmit end in response to a wireless sensing request based on a to-be-sent data packet. Because the data packet does not have sufficient space for adding identification information, only sensing indication information may be added. For example, the transmit end may obtain the sensing data packet by adding the sensing indication information to a first field of the data packet.

Step S302: Detect whether the sensing indication information exists in a first field of the sensing data packet.

Step S303 is performed if the sensing indication information exists in the first field of the sensing data packet.

In some embodiments, when the sensing indication information exists in the first field of the sensing data packet, it indicates that the sensing data packet is a packet for wireless sensing. Therefore, step S303 and subsequent steps need to be performed, so that a preparation for wireless sensing is performed on the sensing data packet.

In some embodiments, when the sensing indication information does not exist in the first field of the sensing data packet, it indicates that the sensing data packet is not a packet for wireless sensing. Therefore, the sensing data packet can be further processed based on a normal dynamic gain value, and data communication is performed, to avoid impact on a normal data communication service.

Step S303: Obtain a fixed gain value.

In some embodiments, the fixed gain value may be a dynamic gain value corresponding to a non-sensing packet, for example, a 1^{st} packet, an intermediate packet, or a last packet. The fixed gain value may alternatively be determined based on dynamic gain values of several consecutive non-sensing packets. For example, a group of gain values that appear most frequently may be determined as the fixed gain value.

In some embodiments, before the fixed gain value is obtained, the fixed gain value may be determined first, and a correspondence between the fixed gain value and the transmit end is stored in a preset location. When the fixed gain value is obtained, the fixed gain value corresponding to the transmit end is obtained from the preset location. Different sensing paired nodes may have different fixed gain values.

Step S304: Store the sensing data packet, and determine, according to an automatic gain control algorithm, a dynamic gain value corresponding to the sensing data packet.

In some embodiments, no identification information is added to the sensing data packet, but only the sensing indication information is added. Therefore, to determine whether the sensing data packet matches the receive end, a third channel estimation result obtained by processing the sensing data packet by using the dynamic gain value needs to be used for detection. If it is determined that the sensing data packet matches the receive end, the sensing data packet needs to be reprocessed by using the fixed gain value. Therefore, the sensing data packet needs to be stored.

In some embodiments, to improve processing efficiency of the sensing data packet to improve wireless sensing efficiency, only original antenna ingress data that is not processed by a gain module may be stored, that is, only a second field of the sensing data packet is stored.

In some embodiments, a channel estimation result is obtained by performing a channel estimation algorithm on the second field of the sensing data packet. Therefore, to improve processing efficiency of the sensing data packet to improve wireless sensing efficiency, only the second field of the sensing data packet may be further processed based on the fixed gain value, to obtain a first channel estimation result. The determining, according to an automatic gain control algorithm, a dynamic gain value corresponding to the sensing data packet includes:
determining, according to the automatic gain control algorithm, a dynamic gain value corresponding to the second field of the sensing data packet.

In some embodiments, the sensing data packet may specifically include at least one of an HE Date packet, a VHT Date packet, and an HT Date packet. When the sensing data packet is the HE Date packet, the first field of the sensing data packet may be specifically an HE-SIG-A1 field or an L-SIG field, and the second field in the sensing data packet may be specifically an HE-LTF field.

Step S305: Process the sensing data packet based on the dynamic gain value corresponding to the sensing data packet, to obtain the third channel estimation result.

In some embodiments, after the dynamic gain value corresponding to the sensing data packet is determined according to the automatic gain control algorithm, the sensing data packet is processed based on the dynamic gain value, to obtain the third channel estimation result. The third channel estimation result is used to demodulate a data field of the sensing data packet, to obtain a sending address and a destination address of the sensing data packet. Then, the receive end can detect, based on the sending address and the destination address of the sensing data packet, whether the sensing data packet matches the receive end.

Step S306: Detect, based on the third channel estimation result, whether the sensing data packet matches the receive end.

Step S307 is performed if the sensing data packet matches the receive end.

In some embodiments, when the receive end does not match the sensing data packet, it indicates that the receive end cannot perform wireless sensing by using the sensing data packet. Therefore, the sensing data packet can be further processed based on the normal dynamic gain value, and data communication is performed, to avoid impact on the normal data communication service.

In some embodiments, no identification information is added to the sensing data packet, but only the sensing indication information is added. Therefore, to determine whether the sensing data packet matches the receive end, the third channel estimation result obtained by processing the sensing data packet by using the dynamic gain value needs to be used for detection.

In some embodiments, FIG. 12 is a flowchart of detecting, according to the third wireless sensing method according to this embodiment of this application, whether the sensing data packet matches the receive end. The detecting, based on the third channel estimation result, whether the sensing data packet matches the receive end may be specifically implemented by performing steps shown in FIG. 12.

Step S401: Demodulate the data field of the sensing data packet based on the third channel estimation result, to obtain the sending address and the destination address of the sensing data packet.

In some embodiments, the sending address and the destination address of the sensing data packet are stored in the data field of the sensing data packet. In this embodiment, a header of a medium access control address (Medium Access Control Address, MAC) in a 1^{st} symbol of the data field of the sensing data packet is demodulated by using the third channel estimation result, to obtain a transmit end address and a receive end address of the sensing data packet.

Step S402: Detect whether the destination address of the sensing data packet is the same as the receive end.

Step S403 is performed if the destination address of the sensing data packet is the same as the receive end. Step S404 is performed if the destination address of the sensing data packet is not the same as the receive end.

In some embodiments, when the destination address of the sensing data packet is different from the receive end, it is proved that the sensing data packet is not sent by the transmit end to the current receive end, but the current receive end is used only as a relay device to forward the sensing data packet to the destination address of the sensing data packet. In this case, it is determined that the sensing data packet does not match the receive end.

In some embodiments, when the destination address of the sensing data packet is the same as the receive end, it is proved that the sensing data packet is sent by the transmit end to the current receive end. In this case, whether the transmit end of the sensing data packet matches the current receive end needs to be determined. If the transmit end of the sensing data packet matches the current receive end, it indicates that the sensing data packet is a sensing data packet that is sent by the transmit end matching the current receive end and that is for wireless sensing, and it is determined that the sensing data packet matches the receive end. If the transmit end of the sensing data packet does not match the current receive end, it indicates that the sensing data packet cannot be used by the current receive end for wireless sensing, and it is determined that the sensing data packet does not match the receive end.

Step S403: Detect whether the transmit end matching the receive end includes the sending address of the sensing data packet.

Step S404 is performed if the transmit end matching the receive end does not include the sending address of the sensing data packet. Step S405 is performed if the transmit end matching the receive end includes the sending address of the sensing data packet.

Step S404: Determine that the sensing data packet does not match the receive end.

Step S405: Determine that the sensing data packet matches the receive end.

In this embodiment, the data field of the sensing data packet is demodulated based on the third channel estimation result, to obtain the sending address and the destination address of the sensing data packet. Then, whether the destination address of the sensing data packet is the same as the receive end and whether the sending address of the sensing data packet is the transmit end matching the receive end are detected separately. It is determined that the sensing data packet matches the receive end only when the destination address of the sensing data packet is the same as the receive end and the sending address of the sensing data packet is the transmit end matching the receive end. A subsequent wireless sensing procedure is performed by using the sensing data packet.

Step S307: Process the sensing data packet based on the fixed gain value, to obtain a first channel estimation result.

In some embodiments, a channel matrix for channel estimation is stored in the second field of the sensing data packet. Therefore, to improve processing efficiency of the sensing data packet to improve wireless sensing efficiency, only the second field of the sensing data packet may be processed based on the fixed gain value, to obtain the first channel estimation result.

Step S308: Determine corresponding channel state information based on the first channel estimation result, and perform wireless sensing by using the channel state information.

In some embodiments, to add the sensing indication information to the sensing data packet, various SIG fields of the data packet need to have spare reserved bits for sensing indication, and the data packet does not have enough bits for filling node identification information, but the sending address and the destination address are stored in the header of the MAC address.

An example in which the sensing sounding packet is the HE data packet is used for description. FIG. 13 is a diagram of processing the HE data packet according to an embodiment of this application.

As shown in FIG. 13, an L-STF field, an L-LTF field, an L-SIG field, an RL-SIG field, and an HE-SIG-A field are processed first by using the dynamic gain value. The HE-SIG-A field is parsed to obtain the sensing indication information. When it is determined, based on the sensing indication information, that the HE data packet is a sensing data packet, processing of the HE data packet includes the following steps:
① Store, starting from an HE-STF field, original time domain data of the HE-STF field and an HE-LTF field that are received by an antenna.
   In some embodiments, only the original time domain data of the HE-LTF field may alternatively be stored.
② Process the HE-STF field and the HE-LTF field by using the dynamic gain value, to obtain the third channel estimation result
③ Demodulate a data field by using the third channel estimation result, to obtain the sending address and the destination address.
Step ④ is performed when the destination address is the same as the receive end, and the sending address is the transmit end matching the receive end.
④ Reprocess the HE-STF field and the HE-LTF field by using the fixed gain value corresponding to the transmit end, to obtain the first channel estimation result, determine the corresponding channel state information by using the first channel estimation result, and perform wireless sensing by using the channel state information.

Arrows of 1 to 4 in FIG. 13 indicate processing procedures of the HE-STF field and the HE-LTF field. One processing procedure is a procedure of normally processing the data field, including ①, ②, and ③ in sequence. A data processing part is not described in detail in this application. In the other processing procedure, whether the receiving address is the same as the receive end and whether the sending address is the transmit end matching the receive end can be determined only after the procedure ③ is performed. The wireless sensing procedure directly includes ① and ④ if the receiving address is the same as the receive end and the sending address is the transmit end matching the receive end.

In some embodiments, the sensing sounding packet may be obtained by adding, by the transmit end, the sensing indication information to a first field of the data packet.

The sensing indication information occupies only 1 bit, and the first field used to add the sensing indication information may be an HE-SIG-A1 field in the HE-SIG-A field, or may be an L-SIG field in which one reserved bit exists, or may be another field having at least one reserved bit. This is not specifically limited in this application.

It should be noted that a VHT-SIG-A field of a very high throughput (Very High Throughput, VHT) NDP packet and an HT-SIG field of a high throughput (High Throughput, HT) NDP are similar to the HE-SIG-A field of the HE NDP packet, and may be processed in the same manner to obtain the sensing sounding packet. Details are not described herein again.

According to the wireless sensing method provided in this embodiment of this application, after the sensing data packet sent by the transmit end is received, when it is determined, based on the sensing indication information, that the data packet is a sensing data packet, original time domain data of the sensing data packet received by the antenna is stored. The sensing data packet is processed by using the dynamic gain value, to obtain the third channel estimation result. A data field is demodulated by using the third channel estimation result, to obtain a sending address and a destination address. When the destination address is the same as the receive end, and the sending address is a transmit end matching the receive end, the sensing data packet is reprocessed by using the fixed gain value corresponding to the transmit end, to obtain the first channel estimation result. The corresponding channel state information is determined based on the first channel estimation result. In this way, the obtained channel state information does not fluctuate due to gain jump caused by automatic gain control. This greatly improves accuracy of obtaining the channel state information, thereby improving precision of performing wireless sensing by using the channel state information, and resolving the problem of low wireless sensing precision.

FIG. 14 is a flowchart of a fourth wireless sensing method according to an embodiment of this application. The method is applied to a receive end. The method may include but is not limited to the following steps.

Step S501: Receive a sensing response packet sent by a transmit end.

In some embodiments, a sensing packet may include the sensing response packet. The sensing response packet is generated by the transmit end in response to a wireless sensing request based on a to-be-sent response packet. Similar to the data packet, the response packet does not have sufficient space for adding identification information either. Therefore, only sensing indication information may be added. For example, the transmit end may obtain the sensing response packet by adding the sensing indication information to a first field of the response packet.

Step S502: Detect whether sensing indication information exists in a first field of the sensing response packet.

Step S503 is performed if the sensing indication information exists in the first field of the sensing response packet.

In some embodiments, when the sensing indication information exists in the first field of the sensing response packet, it indicates that the sensing response packet is a packet for wireless sensing. Therefore, step S503 and subsequent steps need to be performed, so that a preparation for wireless sensing is performed on the sensing response packet.

In some embodiments, when the sensing indication information does not exist in the first field of the sensing response packet, it indicates that the sensing response packet is not a packet for wireless sensing. Therefore, the sensing response packet can be further processed based on a normal dynamic gain value, and a normal communication response is performed, to avoid impact on a communication response service.

Step S503: Obtain a fixed gain value.

In some embodiments, the fixed gain value may be a dynamic gain value corresponding to a non-sensing packet, for example, a 1^{st} packet, an intermediate packet, or a last packet. The fixed gain value may alternatively be determined based on dynamic gain values of several consecutive non-sensing packets. For example, a group of gain values that appear most frequently may be determined as the fixed gain value.

In some embodiments, before the fixed gain value is obtained, the fixed gain value may be determined first, and a correspondence between the fixed gain value and the transmit end is stored in a preset location. When the fixed gain value is obtained, the fixed gain value corresponding to the transmit end is obtained from the preset location. Different sensing paired nodes may have different fixed gain values.

Step S504: Store the sensing response packet, and determine a destination address of the sensing response packet based on the sensing response packet.

In some embodiments, no identification information is added to the sensing data packet, but only the sensing indication information is added. Therefore, to determine whether the sensing data packet matches the receive end, a third channel estimation result obtained by processing the sensing data packet by using the dynamic gain value needs to be used for detection. If it is determined that the sensing data packet matches the receive end, the sensing data packet needs to be reprocessed by using the fixed gain value. Therefore, the sensing data packet needs to be stored.

In some embodiments, to improve processing efficiency of the sensing response packet to improve wireless sensing efficiency, only original antenna ingress data that is not processed by a gain module may be stored, that is, only a second field of the sensing response packet is stored.

In some embodiments, the sensing response packet is generated based on the response packet. The response packet is a response to a request packet or a data packet sent to the transmit end, and is immediately returned by the transmit end (at an interval of 16 µs) after the receive end sends a request packet or a data packet. Therefore, as long as the receive end immediately receives, after sending the packet, a response packet and a destination address of the response packet is the receive end, it can be determined that the response packet matches the receive end. Therefore, when receiving the sensing response packet, the receive end only needs to detect whether the destination address of the sensing response packet is the receive end to determine whether the sensing response packet matches the receive end.

Step S505: Detect, based on the destination address of the sensing response packet, whether the sensing response packet matches the receive end.

Step S506 is performed if the sensing response packet matches the receive end.

In some embodiments, when the receive end matches the sensing response packet, it indicates that the receive end can perform wireless sensing by using the sensing data packet. In this case, step S506 is performed: processing the sensing response packet based on the fixed gain value, to obtain a first channel estimation result, determining corresponding channel state information according to the first channel estimation result, and performing wireless sensing by using the channel state information.

In some embodiments, when the receive end does not match the sensing response packet, it indicates that the receive end cannot perform wireless sensing by using the sensing data packet. Therefore, the sensing response packet can be further processed based on the normal dynamic gain value, and the normal communication response is performed, to avoid impact on the communication response service.

Step S506: Process the sensing response packet based on the fixed gain value, to obtain the first channel estimation result.

In some embodiments, a channel estimation result is obtained by performing a channel estimation algorithm on the second field of the sensing response packet. Therefore, to improve processing efficiency of the sensing response packet to improve wireless sensing efficiency, only the second field of the sensing response packet may be further processed based on the fixed gain value, to obtain the first channel estimation result. The processing the sensing packet based on the fixed gain value, to obtain the first channel estimation result includes:
processing the second field of the sensing response packet based on the fixed gain value, to obtain the first channel estimation result.

In some embodiments, the sensing response packet may be specifically an acknowledge character (Acknowledge character, Ack) frame. The first field of the sensing response packet may be specifically an L-SIG field, and the second field of the sensing response packet may be specifically an L-LTF field.

Step S507: Determine the corresponding channel state information based on the first channel estimation result, and perform wireless sensing by using the channel state information.

In some embodiments, to add the sensing indication information to the sensing response packet, the L-SIG field of the response packet needs to have a spare reserved bit for sensing indication. The response packet does not have enough bits for filling node identification information, and only the destination address is stored in a header of a MAC address.

An example in which the sensing response packet is an Ack packet is used for description. FIG. 15 is a diagram of processing the Ack packet according to an embodiment of this application.

As shown in FIG. 15, processing of the Ack packet includes the following steps.
① Store, starting from an L-STF field, original time domain data of the L-STF field and an L-LTF field that are received by an antenna.
   In some embodiments, only the original time domain data of the L-LTF field may alternatively be stored.
② Process the L-STF field and the L-LTF field by using the dynamic gain value, to obtain a fourth channel estimation result.
③ Demodulate an L-SIG field by using the fourth channel estimation result, to obtain the sensing indication information, and determine, based on the sensing indication information, whether the packet is a sensing sounding packet.
④ If the packet is a sensing sounding packet, reprocess the L-STF field and the L-LTF field by using the fixed gain value corresponding to the transmit end, to obtain the first channel estimation result, determine the corresponding channel state information by using the first channel estimation result, and perform wireless sensing by using the channel state information.

According to the wireless sensing method provided in this embodiment of this application, after the sensing response packet sent by the transmit end is received, when it is determined, based on the sensing indication information, that the response packet is a sensing response packet, original time domain data of the sensing response packet received by the antenna is stored. The sensing response packet is processed by using the dynamic gain value, to obtain the fourth channel estimation result. The first field is demodulated by using the fourth channel estimation result, to obtain the sensing indication information. It is determined, based on the sensing indication information, that the packet is a sensing sounding packet. The sensing response packet is reprocessed by using the fixed gain value corresponding to the transmit end, to obtain the first channel estimation result. The corresponding channel state information is determined based on the first channel estimation result. In this way, the obtained channel state information does not fluctuate due to gain jump caused by automatic gain control. This greatly improves accuracy of obtaining the channel state information, thereby improving precision of performing wireless sensing by using the channel state information, and resolving a problem of low wireless sensing precision.

FIG. 16 is a flowchart of a fifth wireless sensing method according to an embodiment of this application. The method is applied to a transmit end. The method may include but is not limited to the following steps.

Step S601: Generate a to-be-sent packet in response to a wireless sensing request.

Step S602: Add sensing indication information to the to-be-sent packet, to obtain a sensing packet.

In some embodiments, the to-be-sent packet includes a sounding packet.

The adding sensing indication information to the to-be-sent packet, to obtain a sensing packet includes:
adding the sensing indication information to a first field of the sounding packet, and adding identification information of the transmit end to a second field of the sounding packet, to obtain a sensing sounding packet.

In some embodiments, the to-be-sent packet includes a data packet.

The adding sensing indication information to the to-be-sent packet, to obtain a sensing packet includes:
adding the sensing indication information to a first field of the data packet, to obtain a sensing data packet.

In some embodiments, the to-be-sent packet includes a response packet.

The adding sensing indication information to the to-be-sent packet, to obtain a sensing packet includes:
adding the sensing indication information to a first field of the response packet, to obtain a sensing sounding packet.

Step S603: Send the sensing packet to a receive end.

It should be noted that embodiments of the wireless sensing method applied to the transmit end in this embodiment of this application and the embodiments of the wireless sensing methods applied to the receive end in embodiments of this application are based on a same inventive concept. Therefore, for specific implementations of this embodiment, refer to the foregoing corresponding implementations of the wireless sensing methods applied to the receive end. Repeated parts are not described again.

According to the wireless sensing method provided in this embodiment of this application, after receiving the sensing packet sent by the transmit end, the receive end processes the sensing packet by using a fixed gain value, to obtain a first channel estimation result, and determines corresponding channel state information based on the first channel estimation result. In this way, the obtained channel state information does not fluctuate due to gain jump caused by automatic gain control. This greatly improves accuracy of obtaining the channel state information, thereby improving precision of performing wireless sensing by using the channel state information, and resolving a problem of low wireless sensing precision.

FIG. 17 is a working flowchart of a wireless sensing system according to an embodiment of this application. The wireless sensing system includes but is not limited to a transmit end 200 and a receive end 300.

The transmit end 200 is configured to: generate a to-be-sent packet in response to a wireless sensing request; add sensing indication information to the to-be-sent packet, to obtain a sensing packet; and send the sensing packet to the receive end.

The receive end 300 is configured to: receive the sensing packet sent by the transmit end; obtain a fixed gain value, and process the sensing packet based on the fixed gain value, to obtain a first channel estimation result; and determine corresponding channel state information based on the first channel estimation result, and perform wireless sensing by using the channel state information.

It should be noted that embodiments of the wireless sensing system in this embodiment of this application and the embodiments of the wireless sensing methods in embodiments of this application are based on a same inventive concept. Therefore, for specific implementations of this embodiment, refer to the foregoing corresponding implementations of the wireless sensing methods. Repeated parts are not described again.

According to the wireless sensing method provided in this embodiment of this application, after receiving the sensing packet sent by the transmit end, the receive end processes the sensing packet by using a fixed gain value, to obtain the first channel estimation result, and determines the corresponding channel state information based on the first channel estimation result. In this way, the obtained channel state information does not fluctuate due to gain jump caused by automatic gain control. This greatly improves accuracy of obtaining the channel state information, thereby improving precision of performing wireless sensing by using the channel state information, and resolving a problem of low wireless sensing precision.

FIG. 18 is a diagram of a structure of a wireless sensing apparatus according to an embodiment of this application. The wireless sensing apparatus is used in a receive end. The wireless sensing apparatus includes:
a receiving module 10, configured to receive a sensing packet sent by a transmit end;
a first obtaining module 20, configured to: obtain a fixed gain value, and process the sensing packet based on the fixed gain value, to obtain a first channel estimation result; and
a determining module 30, configured to: determine corresponding channel state information based on the first channel estimation result, and perform wireless sensing by using the channel state information.

On a basis of the foregoing embodiment, in some embodiments, the sensing packet includes a sensing sounding packet.

The first obtaining module 20 may be specifically configured to:
obtain identification information of the transmit end based on the sensing sounding packet, and detect, based on the identification information, whether the transmit end matches the receive end; and
if the transmit end matches the receive end, determine, based on a preset relationship table, a fixed gain value corresponding to the identification information, where a correspondence between the identification information and the fixed gain value is stored in the preset relationship table.

On a basis of the foregoing embodiments, in some embodiments, the first obtaining module 20 may be further configured to:
obtain a fixed gain value corresponding to at least one transmit end; and
establish a correspondence between identification information of the at least one transmit end and the fixed gain value, and generate the preset relationship table based on the correspondence between the identification information of the at least one transmit end and the fixed gain value.

On a basis of the foregoing embodiments, in some embodiments, the first obtaining module 20 may be specifically configured to:
receive a non-sensing packet sent by the transmit end; and
determine, according to an automatic gain control algorithm, a dynamic gain value corresponding to the non-sensing packet, and determine, as the fixed gain value corresponding to the transmit end, the dynamic gain value corresponding to the non-sensing packet.

On a basis of the foregoing embodiments, in some embodiments, the first obtaining module 20 may be specifically configured to:
receive at least one non-sensing packet sent by the transmit end; and
determine, according to an automatic gain control algorithm, a dynamic gain value corresponding to the at least one non-sensing packet, and determine, as the fixed gain value corresponding to the transmit end, a dynamic gain value that appears most frequently.

On a basis of the foregoing embodiments, in some embodiments, the first obtaining module 20 may be further configured to:
obtain all devices connected to the receive end, and determine, from all the devices connected to the receive end, at least one device as a transmit end matching the receive end; and
allocate corresponding identification information to each transmit end matching the receive end.

On a basis of the foregoing embodiments, in some embodiments, the first obtaining module 20 may be specifically configured to:
select, as the transmit end matching the receive end, a device whose device attribute meets a preset requirement from all the devices connected to the receive end, where the device attribute includes at least one of a device type, a device location, and a device signal strength.

On a basis of the foregoing embodiments, in some embodiments, the identification information includes at least one of a connection identification code, a partial connection identification code, and a preset identity number.

On a basis of the foregoing embodiments, in some embodiments, the first obtaining module 20 may be further configured to:
determine, according to an automatic gain control algorithm, a dynamic gain value corresponding to a preset non-sensing packet and a dynamic gain value corresponding to the sensing sounding packet, where the preset non-sensing packet is a received non-sensing packet sent by the transmit end before the sensing sounding packet is sent;
calculate a difference between the dynamic gain value corresponding to the sensing sounding packet and the dynamic gain value corresponding to the preset non-sensing packet;
determine whether the difference exceeds a preset threshold;
if the difference does not exceed the preset threshold, perform a step of processing the sensing sounding packet based on the fixed gain value, to obtain the first channel estimation result, or
if the difference exceeds the preset threshold, process the sensing sounding packet based on the dynamic gain value corresponding to the sensing sounding packet, to obtain a second channel estimation result; and
determine corresponding channel state information based on the second channel estimation result, and perform wireless sensing by using the channel state information.

On a basis of the foregoing embodiments, in some embodiments, the first obtaining module 20 may be further configured to:
modify the preset threshold in response to an input preset threshold modification command.

On a basis of the foregoing embodiments, in some embodiments, the first obtaining module 20 may be further configured to:
detect whether the sensing indication information exists in a first field of the sensing packet; and
if the sensing indication information exists in the first field of the sensing packet, perform a step of obtaining the fixed gain value.

On a basis of the foregoing embodiments, in some embodiments, the first obtaining module 20 may be specifically configured to:
read the identification information of the transmit end from the second field of the sensing sounding packet.

On a basis of the foregoing embodiments, in some embodiments, the first obtaining module 20 may be specifically configured to:
process a third field of the sensing sounding packet based on the fixed gain value, to obtain the first channel estimation result.

On a basis of the foregoing embodiment, in some embodiments, the sensing packet includes a sensing data packet.

The first obtaining module 20 may be specifically configured to:
store the sensing data packet, and determine, according to an automatic gain control algorithm, a dynamic gain value corresponding to the sensing data packet;
process the sensing data packet based on the dynamic gain value corresponding to the sensing data packet, to obtain a third channel estimation result;
detect, based on the third channel estimation result, whether the sensing data packet matches the receive end; and
if the sensing data packet matches the receive end, process the sensing data packet based on the fixed gain value, to obtain the first channel estimation result.

On a basis of the foregoing embodiments, in some embodiments, the first obtaining module 20 may be specifically configured to:
demodulate a data field of the sensing data packet based on the third channel estimation result, to obtain a sending address and a destination address of the sensing data packet;
detect whether the destination address of the sensing data packet is the same as the receive end; and
if the destination address of the sensing data packet is not the same as the receive end, determine that the sensing data packet does not match the receive end, or
if the destination address of the sensing data packet is the same as the receive end, detect whether a transmit end matching the receive end includes the sending address of the sensing data packet; and
if the transmit end matching the receive end does not include the sending address of the sensing data packet, determine that the sensing data packet does not match the receive end, or
if the transmit end matching the receive end includes the sending address of the sensing data packet, determine that the sensing data packet matches the receive end.

On a basis of the foregoing embodiments, in some embodiments, the first obtaining module 20 may be further configured to:
detect whether sensing indication information exists in a first field of the sensing data packet; and
if the sensing indication information exists in the first field of the sensing data packet, perform a step of obtaining the fixed gain value.

On a basis of the foregoing embodiments, in some embodiments, the first obtaining module 20 may be specifically configured to:
determine, according to the automatic gain control algorithm, a dynamic gain value corresponding to a second field of the sensing data packet.

On a basis of the foregoing embodiments, in some embodiments, the first obtaining module 20 may be specifically configured to:
process the second field of the sensing data packet based on the fixed gain value, to obtain the first channel estimation result.

On a basis of the foregoing embodiment, in some embodiments, the sensing packet includes a sensing response packet.

The first obtaining module 20 may be specifically configured to:
store the sensing response packet, and determine a destination address of the sensing response packet based on the sensing response packet;
detect, based on the destination address of the sensing response packet, whether the sensing response packet matches the receive end; and
if the sensing response packet matches the receive end, process the sensing response packet based on the fixed gain value, to obtain the first channel estimation result.

On a basis of the foregoing embodiments, in some embodiments, the first obtaining module 20 may be further configured to:
detect whether sensing indication information exists in a first field of the sensing response packet; and
if the sensing indication information exists in the first field of the sensing response packet, perform a step of obtaining the fixed gain value.

On a basis of the foregoing embodiments, in some embodiments, the first obtaining module 20 may be specifically configured to:
determine, according to an automatic gain control algorithm, a dynamic gain value corresponding to a second field of the sensing response packet.

On a basis of the foregoing embodiments, in some embodiments, the first obtaining module 20 may be specifically configured to:
process the second field of the sensing response packet based on the fixed gain value, to obtain the first channel estimation result.

On a basis of the foregoing embodiments, in some embodiments, the receiving module 10 may be further configured to:
enable a wireless sensing function in response to a wireless sensing request.

FIG. 19 is a diagram of a structure of another wireless sensing apparatus according to an embodiment of this application. The wireless sensing apparatus is used in a transmit end. The wireless sensing apparatus includes:
a second obtaining module 40, configured to generate a to-be-sent packet in response to a wireless sensing request;
an adding module 50, configured to add sensing indication information to the to-be-sent packet, to obtain a sensing packet; and
a sending module 60, configured to send the sensing packet to a receive end.

On a basis of the foregoing embodiment, in some embodiments, the to-be-sent packet includes a sounding packet.

The adding module 50 may be specifically configured to:
add the sensing indication information to a first field of the sounding packet, and add identification information of the transmit end to a second field of the sounding packet, to obtain a sensing sounding packet.

On a basis of the foregoing embodiment, in some embodiments, the to-be-sent packet includes a data packet.

The adding module 50 may be specifically configured to:
add the sensing indication information to a first field of the data packet, to obtain a sensing data packet.

On a basis of the foregoing embodiment, in some embodiments, the to-be-sent packet includes a response packet.

The adding module 50 may be specifically configured to:
add the sensing indication information to a first field of the response packet, to obtain a sensing sounding packet.

Embodiments in this application are all described in a progressive manner, for same and similar parts in embodiments, refer to these embodiments. Each embodiment focuses on differences from other embodiments. Especially, a system embodiment is basically similar to the method embodiments, and therefore is described briefly. For related parts, refer to partial descriptions of the method embodiments.

The foregoing descriptions are merely embodiments of this application, and are not intended to limit this application. For a person skilled in the art, this document may have various modifications and variations. Any modification, equivalent replacement, improvement, and the like made without departing from the spirit and principle of this application shall fall within the scope of the claims in this document.

## Claims

1. A wireless sensing method, applied to a receive end, wherein the method comprises:
receiving a sensing packet sent by a transmit end;
obtaining a fixed gain value, and processing the sensing packet based on the fixed gain value, to obtain a first channel estimation result; and
determining corresponding channel state information based on the first channel estimation result, and performing wireless sensing by using the channel state information.

2. The method according to claim 1, wherein the sensing packet comprises a sensing sounding packet; and
the obtaining a fixed gain value comprises:
obtaining identification information of the transmit end based on the sensing sounding packet, and detecting, based on the identification information, whether the transmit end matches the receive end; and
if the transmit end matches the receive end, determining, based on a preset relationship table, a fixed gain value corresponding to the identification information, wherein a correspondence between the identification information and the fixed gain value is stored in the preset relationship table.

3. The method according to claim 2, wherein before the determining, based on a preset relationship table, a fixed gain value corresponding to the identification information, the method further comprises:
obtaining a fixed gain value corresponding to at least one transmit end; and
establishing a correspondence between identification information of the at least one transmit end and the fixed gain value, and generating the preset relationship table based on the correspondence between the identification information of the at least one transmit end and the fixed gain value.

4. The method according to claim 3, wherein the obtaining a fixed gain value corresponding to at least one transmit end comprises:
receiving a non-sensing packet sent by the transmit end; and
determining, according to an automatic gain control algorithm, a dynamic gain value corresponding to the non-sensing packet, and determining, as the fixed gain value corresponding to the transmit end, the dynamic gain value corresponding to the non-sensing packet.

5. The method according to claim 3, wherein the obtaining a fixed gain value corresponding to at least one transmit end comprises:
receiving at least one non-sensing packet sent by the transmit end; and
determining, according to an automatic gain control algorithm, a dynamic gain value corresponding to the at least one non-sensing packet, and determining, as the fixed gain value corresponding to the transmit end, a dynamic gain value that appears most frequently.

6. The method according to claim 2, wherein before the detecting, based on the identification information, whether the transmit end matches the receive end, the method further comprises:
obtaining all devices connected to the receive end, and determining, from all the devices connected to the receive end, at least one device as a transmit end matching the receive end; and
allocating corresponding identification information to each transmit end matching the receive end.

7. The method according to claim 6, wherein the determining, from all the devices connected to the receive end, at least one device as a transmit end matching the receive end comprises:
selecting, as the transmit end matching the receive end, a device whose device attribute meets a preset requirement from all the devices connected to the receive end, wherein the device attribute comprises at least one of a device type, a device location, and a device signal strength.

8. The method according to claim 6, wherein the identification information comprises at least one of a connection identification code, a partial connection identification code, and a preset identity number.

9. The method according to claim 2, wherein before the processing the sensing packet based on the fixed gain value, to obtain a first channel estimation result, the method further comprises:
determining, according to an automatic gain control algorithm, a dynamic gain value corresponding to a preset non-sensing packet and a dynamic gain value corresponding to the sensing sounding packet, wherein the preset non-sensing packet is a received non-sensing packet sent by the transmit end before the sensing sounding packet is sent;
calculating a difference between the dynamic gain value corresponding to the sensing sounding packet and the dynamic gain value corresponding to the preset non-sensing packet;
determining whether the difference exceeds a preset threshold;
if the difference does not exceed the preset threshold, performing a step of processing the sensing sounding packet based on the fixed gain value, to obtain the first channel estimation result, or
if the difference exceeds the preset threshold, processing the sensing sounding packet based on the dynamic gain value corresponding to the sensing sounding packet, to obtain a second channel estimation result; and
determining corresponding channel state information based on the second channel estimation result, and performing wireless sensing by using the channel state information.

10. The method according to claim 9, wherein before the determining whether the difference exceeds a preset threshold, the method further comprises:
modifying the preset threshold in response to an input preset threshold modification command.

11. The method according to any one of claims 2 to 10, wherein before the obtaining a fixed gain value, the method further comprises:
detecting whether sensing indication information exists in a first field of the sensing packet; and
if the sensing indication information exists in the first field of the sensing packet, performing a step of obtaining the fixed gain value;
the obtaining identification information of the transmit end based on the sensing sounding packet comprises:
reading the identification information of the transmit end from a second field of the sensing sounding packet; and
the processing the sensing packet based on the fixed gain value, to obtain a first channel estimation result comprises:
processing a third field of the sensing sounding packet based on the fixed gain value, to obtain the first channel estimation result.

12. The method according to claim 11, wherein the sensing sounding packet comprises at least one of an HE NDP packet, a VHT NDP packet, and an HT NDP packet; and
when the sensing sounding packet is the HE NDP packet, the first field of the sensing sounding packet is an HE-SIG-A1 field, an HE-SIG-A2 field, or an L-SIG field, the second field of the sensing sounding packet is an HE-SIG-A2 field, and the third field of the sensing sounding packet is an HE-LTF field.

13. The method according to claim 1, wherein the sensing packet comprises a sensing data packet; and
the processing the sensing packet based on the fixed gain value, to obtain a first channel estimation result comprises:
storing the sensing data packet, and determining, according to an automatic gain control algorithm, a dynamic gain value corresponding to the sensing data packet;
processing the sensing data packet based on the dynamic gain value corresponding to the sensing data packet, to obtain a third channel estimation result;
detecting, based on the third channel estimation result, whether the sensing data packet matches the receive end; and
if the sensing data packet matches the receive end, processing the sensing data packet based on the fixed gain value, to obtain the first channel estimation result.

14. The method according to claim 13, wherein the detecting, based on the third channel estimation result, whether the sensing data packet matches the receive end comprises:
demodulating a data field of the sensing data packet based on the third channel estimation result, to obtain a sending address and a destination address of the sensing data packet;
detecting whether the destination address of the sensing data packet is the same as the receive end; and
if the destination address of the sensing data packet is not the same as the receive end, determining that the sensing data packet does not match the receive end, or
if the destination address of the sensing data packet is the same as the receive end, detecting whether a transmit end matching the receive end comprises the sending address of the sensing data packet; and
if the transmit end matching the receive end does not comprise the sending address of the sensing data packet, determining that the sensing data packet does not match the receive end, or
if the transmit end matching the receive end comprises the sending address of the sensing data packet, determining that the sensing data packet matches the receive end.

15. The method according to claim 13 or 14, wherein before the obtaining a fixed gain value, the method further comprises:
detecting whether sensing indication information exists in a first field of the sensing data packet; and
if the sensing indication information exists in the first field of the sensing data packet, performing a step of obtaining the fixed gain value;
the determining, according to an automatic gain control algorithm, a dynamic gain value corresponding to the sensing data packet comprises:
determining, according to the automatic gain control algorithm, a dynamic gain value corresponding to a second field of the sensing data packet; and
the processing the sensing packet based on the fixed gain value, to obtain a first channel estimation result comprises:
processing the second field of the sensing data packet based on the fixed gain value, to obtain the first channel estimation result.

16. The method according to claim 15, wherein the sensing data packet comprises at least one of an HE Date packet, a VHT Date packet, and an HT Date packet; and
when the sensing data packet is the HE Date packet, the first field of the sensing data packet is an HE-SIG-A1 field or an L-SIG field, and the second field of the sensing data packet is an HE-LTF field.

17. The method according to claim 1, wherein the sensing packet comprises a sensing response packet; and
the processing the sensing packet based on the fixed gain value, to obtain a first channel estimation result comprises:
storing the sensing response packet, and determining a destination address of the sensing response packet based on the sensing response packet;
detecting, based on the destination address of the sensing response packet, whether the sensing response packet matches the receive end; and
if the sensing response packet matches the receive end, processing the sensing response packet based on the fixed gain value, to obtain the first channel estimation result.

18. The method according to claim 17, wherein before the obtaining a fixed gain value, the method further comprises:
detecting whether sensing indication information exists in a first field of the sensing response packet; and
if the sensing indication information exists in the first field of the sensing response packet, performing a step of obtaining the fixed gain value;
the determining, according to an automatic gain control algorithm, a dynamic gain value corresponding to the sensing response packet comprises:
determining, according to the automatic gain control algorithm, a dynamic gain value corresponding to a second field of the sensing response packet; and
the processing the sensing packet based on the fixed gain value, to obtain a first channel estimation result comprises:
processing the second field of the sensing response packet based on the fixed gain value, to obtain the first channel estimation result.

19. The method according to claim 18, wherein the sensing response packet is an Ack packet;
the first field of the sensing response packet is an L-SIG field; and
the second field of the sensing response packet is an L-LTF field.

20. The method according to claim 1, wherein before the receiving a sensing packet sent by a transmit end, the method further comprises:
enabling a wireless sensing function in response to a wireless sensing request.

21. A wireless sensing system, comprising a transmit end and a receive end, wherein
the transmit end is configured to: generate a to-be-sent packet in response to a wireless sensing request; add sensing indication information to the to-be-sent packet, to obtain a sensing packet; and send the sensing packet to the receive end; and
the receive end is configured to: receive the sensing packet sent by the transmit end; obtain a fixed gain value, and process the sensing packet based on the fixed gain value, to obtain a first channel estimation result; and determine corresponding channel state information based on the first channel estimation result, and perform wireless sensing by using the channel state information.

22. A wireless sensing apparatus, used in a receive end, wherein the wireless sensing apparatus comprises:
a receiving module, configured to receive a sensing packet sent by a transmit end;
a first obtaining module, configured to: obtain a fixed gain value, and process the sensing packet based on the fixed gain value, to obtain a first channel estimation result; and
a determining module, configured to: determine corresponding channel state information based on the first channel estimation result, and perform wireless sensing by using the channel state information.

23. An electronic device, comprising:
a processor and a memory, wherein the memory is configured to store at least one instruction, and when the instruction is loaded and executed by the processor, the wireless sensing method according to any one of claims 1 to 20 is implemented.

24. A computer-readable storage medium, wherein the computer-readable storage medium stores a computer program, and when the computer program is executed by a processor, the wireless sensing method according to any one of claims 1 to 20 is implemented.
